(19) **Europäisches Patentamt**

**European Patent Office**

**Office européen des brevets**

(11) Veröffentlichungsnummer: **0 483 357 B1**

(12) **EUROPÄISCHE PATENTSCHRIFT**

(45) Veröffentlichungstag der Patentschrift: **02.08.95**

(51) Int. Cl.⁶: **F03B 13/18**

(21) Anmeldenummer: **90910979.5**

(22) Anmeldetag: **22.05.90**

(86) Internationale Anmeldenummer:
**PCT/SU90/00131**

(87) Internationale Veröffentlichungsnummer:
**WO 91/00962 (24.01.91 91/03)**

(54) **VERFAHREN ZUR WELLENENERGIEUMFORMUNG UND WELLENENERGIEANLAGE ZUR DURCHFUHRUNGDESSELBEN.**

(30) Priorität: **06.07.89 SU 4708041**
**02.11.89 SU 4752620**

(43) Veröffentlichungstag der Anmeldung:
**06.05.92 Patentblatt 92/19**

(45) Bekanntmachung des Hinweises auf die
Patenterteilung:
**02.08.95 Patentblatt 95/31**

(84) Benannte Vertragsstaaten:
**DE FR GB IT SE**

(56) Entgegenhaltungen:
**SU-A- 1 260 555**
**SU-A- 1 260 556**
**SU-A- 1 285 183**
**SU-A- 1 363 393**

**Keine Entgegenhaltungen.**

(73) Patentinhaber: **VALIEV, Baidar Garifovich**
**pr. Makeeva, 41-17, Chelyabinskaya obl.**
**Miass, 456322 (SU)**

Patentinhaber: **KOLP, Albert Yakovlevich**
**ul. Zhukovskogo, 12-20, Chelyabinskaya obl.**
**Miass, 456324 (SU)**

Patentinhaber: **MARIINA, Nailya Baidarovna**
**ul. Molodogvardeiskaya, 8a-4, Sverdlovskaya obl.**
**Kamyshlov, 623530 (SU)**

Patentinhaber: **KOLP, Yakov Albertovich**
**MFTI, obschezhitie N3, komm.111, Moskovskaya obl.,**
**Dolgroprudny, 141700 (SU)**

Patentinhaber: **PECHENKIN, Leonid Alexandrovich**
**ul. Tsiolkovskogo, 18-60, Chelyabinskaya obl.**
**Miass, 456322 (SU)**

(72) Erfinder: **VALIEV, Baidar Garifovich**
**pr. Makeeva, 41-17, Chelyabinskaya obl.**
**Miass, 456322 (SU)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Erfinder: **KOLP, Albert Yakovlevich**
**ul. Zhukovskogo, 12-20, Chelyabinskaya obl.**
**Miass, 456324 (SU)**
Erfinder: **MARIINA, Nailya Baidarovna**
**ul. Molodogvardeiskaya, 8a-4, Sverdlovskaya**
**obl.**
**Kamyshlov, 623530 (SU)**
Erfinder: **KOLP, Yakov Albertovich**
**MFTI, obschezhitie N3, komm.111, Mos-**
**kovskaya obl.,**
**Dolgroprudny, 141700 (SU)**
Erfinder: **PECHENKIN, Leonid Alexandrovich**
**ul. Tsiolkovskogo, 18-60, Chelyabinskaya obl.**
**Miass, 456322 (SU)**


(74) Vertreter: **Sparing Röhl Henseler Patentan-**
**wälte**
**Postfach 14 04 43**
**D-40074 Düsseldorf (DE)**

**Beschreibung**

Technisches Gebiet

Die Erfindung betrifft ein Verfahren zur Umformung von Wellenenergie mittels eines auf einem Schwimmittel installierten Schwingungserzeugers mit mindestens einer um eine Drehachse beweglichen Unwuchtmasse, wobei der Unwuchtmasse eine Anfangsgeschwindigkeit erteilt und ihre beschleunigte Bewegung auf einer vorgegebenen Bahn zur Aufspeicherung von Energie durch die Unwuchtmasse bewirkt wird, wobei die Bewegung eine volle Umdrehung der Unwuchtmasse und eine Verschiebung der Drehachse in einer zum Schwimmittel im wesentlichen senkrechten Ebene infolge Einwirkens des Schwimmittels während der Periode der Aufwärtsbewegung des letzteren auf einer Welle umfaßt, wobei die Entnahme der in der Unwuchtmasse aufgespeicherten Energie während der Aufwärtsbewegung des Schwimmittels auf der Welle erfolgt, sowie eine Anlage zur Wellenenergieumformung mit einem einer Wellenbewegung folgenden Schwimmittel, einem Schwingungserzeuger, der eine in einer zum Schwimmittel auf- und abbeweglich geführten Stütze aufweist, die wenigstens eine um eine in einer Ebene im wesentlichen senkrecht zur Bewegungsrichtung des Schwingungserzeugers angeordnete Drehachse drehbare Unwuchtmasse aufnimmt, wobei erste und zweite Mittel zum Begrenzen der Bewegung der Stütze in beiden Richtungen vorgesehen sind, und einem elektrischen Generator zur Energieentnahme von den Unwuchtmassen.

Zugrunde liegender Stand der Technik

Gegenwärtig ist die Energiegewinnung durch umweltfreundliche Verfahren sehr aktuell.

Bekannte Energiegewinnungsverfahren führen zur Beeinträchtigung der ökologischen Situation der Erde. So bewirken beispielsweise Wärmekraftwerke eine Verunreinigung und Überhitzung der Atmosphäre, Atomkraftwerke eine Atmosphärenüberhitzung und Untergrundstrahlungserhöhung und Wasserkraftwerke einen Entzug von Nutzflächen, die zur industriellen und landwirtschaftlichen Verwertung geeignet sind. Einer der möglichen Wege zur Lösung der genannten Problem besteht in der Ausnutzung von alternativen Energiequellen, so unter anderem in der Erhöhung der Effektivität der Energiegewinnung aus Meereswellen in einem weiten Frequenzereich.

Die Anwendung von herkömmlichen Energieumformungsprinzipien, die auf einer Umwandlung der schwingenden Bewegung von Meereswellen mit Hilfe von verschiedenartigen Kurven- und Hebelgetrieben, Schwimmern, hydraulischen und pneumatischen Systemen beruhen, gestattet es wegen der geringen Effektivität derselben nicht, Energieanlagen mit vertretbarer Leistung und annehmbaren Massen- und Abmessungsparametern zu schaffen und diese auf vorhandenen Schwimmitteln zu installieren.

Es sind Wellenenergieanlagen bekannt, die nach einem Verfahren funktionieren, das auf der Umformung der von der Welle gelieferten potentiellen Energie in die kinetische Energie der Drehung einer Wasserturbine beruht, welche mit einem elektrischen Generator zusammenwirkt. Ähnliche Wellenenergieanlagen sind beispielsweise in einem Triebwerk realisiert, das durch Wellenenergie angetrieben wird (US-A-4 152 895).

Das Triebwerk ist als eine ortsfest (in bezug auf den Meeresboden) angeordnete sphärische Kuppel ausgebildet, deren Oberteil sich auf der Wasseroberfläche befindet. Die Kuppel ist mit einem senkrechten Schacht (Rohr) mit einem über diesem befindlichen Refraktionsgefäß darauf versehen. Im unteren Schachtteil ist auf einer vertikalen Welle die Wasserturbine, im oberen Teil desselben aber auf derselben Welle ein elektrischer Generator befestigt.

Das Prinzipschema der Elektroenergieerzeugung durch das beschriebenen Wellentriebwerk erinnert an ein Wasserkraftwerk mit dem alleinigen Unterschied, daß im letzteren zwecks Erhöhung des Staudruckes eigens ein Wasserhöhengefälle geschaffen wird. Aus einleuchtenden Gründen hängt das Höhengefälle bei der beschriebenen Anlage voll und ganz von der Wasseraufstiegshöhe in der Welle ab. Das bedingt eine geringe Effektivität der Anlage. Darüber hinaus sind vorhandene, vom Meerwasser umströmte bewegliche Baugruppen ingenieurtechnisch zwar realisierbar, doch sind dafür spezielle korrosionsfeste Werkstoffe sowie besondere Vorrichtungen erforderlich, die das Ankleben von Meeresorganismen und Pflanzen an reibenden Oberflächen verhindern.

Daraus ist erkennbar, daß die technische Effektivität einer derartigen Anlage und ähnlicher hydraulischer Wellenkraftanlagen bedeutend niedriger als die technische Effektivität herkömmlicher Kraftwerke ist.

Bekannt sind ferner Wellenenergieanlagen, die nach einem Verfahren funktionieren, das auf der Umformung der Schwingungsenergie von auf der Wasseroberfläche liegenden Schwimmitteln wie beispielsweise Schwimmer, Flöße u.ä. mit Hilfe von bekannten Umformungseinrichtungen (Hebel-, Kurbei-, Zahnrad- und Zannstangengetrieben) in Rotationsenergie eines elektrischen Generators beruht. Diese Anlagen sind durch eine räumliche Lageänderung eines mechanischen Körpers in bezug auf eine gegen die Welleneinwirkung inerte bzw. in Gegenphase bewegte Einrichtung gekennzeichnet.

Es ist eine Einrichtung bekannt (US-A-4300871), die das Prinzip eines schwingenden Flügels benutzt. Die Einrichtung besteht aus mehreren Flügeln, die auf einer gemeinsamen Achse schwingen. Im Innern eines jeden Flügels sind Kreisel untergebracht, die mit dem Flügel und mit der Achse verbunden sind. Die relative Verschiebung von Flügel und Achse ruft eine Kreiselpräzessionskraft hervor, die zur Gewinnung von Elektroenergie verwertet wird. Das Verfahren besteht in sukzessiver Umformung der Wellenschwingungen in Winkelbewegungen des Flügels, dann in die Kreiselpräzession und schließlich in eine nutzbare Energieform.

Bekannt sind Einrichtungen, die auf der Basis der "Solter-Ente" (GB-A-1482085) ausgeführt sind und gegen die Wellenbewegungsrichtung empfindlich sind. Die höchste Effektivität weist die Einrichtung in dem Fall auf, wenn die Welle von seiten des "Entenschnabels" anströmt, die geringste Effektivität liegt bei einem Wellenanströmwinkel von 90° und mehr vor.

Bei diesen Anströmwinkeln funktioniert die Einrichtung praktisch nicht. Darüber hinaus reagiert die Einrichtung auf die Vertikalkomponente der Wellenschwingungen nur schwach, weil sie eine feste, für die"Enten" gemeinsame Achse besitzt. Alles Gesagte gestattet es, auf der Basis der "Solter-Enten" eine effektive Wellenenergieanlage zu schaffen.

Es sind ferner Wellenenergieanlagen bekannt, die nach einem Verfahren funktionieren, das auf der Anwendung von Luft als Arbeitsmedium beruht, die von der Wellenenergie komprimiert wird und eine Druckluftturbine in Gang setzt, welche mit einem elektrischen Generator verbunden ist. Diese Einrichtungen kommen einem Zylinder-Kolben-System nahe, wobei Wasser als Kolben auftritt. Zur typischen Wellenenergieanlage dieser Klasse kann man eine Anlage zählen (US-A-4405866), die eine Luftkammer, deren Boden auf der Seite der Wasseroberfläche offen ist, sowie ein System von Kanälen enthält, die die Luftkammer mit dem Turbinen-Generator-Satz verbinden. Der letztere enthält zwei Turbinen mit ein und derselben Umlaufrichtung, die eine gemeinsame Welle besitzen, welche mit einem elektrischen Generator verbunden ist. Die eine Turbine versetzt den Generator bei Luftverdichtung in der Anlagenkammer, die andere aber bei Zuführung von atmosphärischer Luft in die Kammer bei Wellenabfall in Drehung. In dieser Weise werden bei der Auf- und Abwärtsbewegung der Wasseroberfläche unter der Welleneinwirkung im Innern der Luftkammer Luftströme erzeugt, die in entgegengesetzten Richtungen fließen und abwechselnd durch die jeweiligen Turbinen ein und derselben Umlaufrichtung laufen.

Eines der Probleme bei der Entwicklung der erwähnten Anlagen ist die Schaffung von Druckluftturbinen, in denen die Luftverdichtung zyklisch erfolgt, während die Turbinenrotation ununterbrochen sein soll. Dieser Widerspruch erzwingt die Benutzung von Druckspeichern, die die Druckluftschwingungen beim Eintritt in die Turbine abglätten.

Allerdings machen die vorhandenen zusätzlichen Einrichtungen die Konstruktion der Wellenenergieanlage kompliziert und beeinträchtigen die wirtschaftlichen Kennwerte derselben. Darüber hinaus verwerten die hydropneumatischen Wellenenergieanlagen Seeluft für den Turbinenantrieb, die mit Meerwasserdämpfen gesättigt ist, welche aktive Salzionen enthalten, die gegenüber den mit ihnen während der langen Betriebsdauer unmittelbar in Berührung stehenden Werkstoffen außerordentlich aggressiv sind, was einen vorzeitigen Ausfall der Einzelteile der Anlage bedingt.

Außerdem besitzen die beschriebenen Anlagen, welche nach den im vorstehenden beschriebenen Verfahren funktionieren, eine niedrige spezifische Leistung.

Bekannt sind weiterhin Wellenenergieanlagen, deren Funktion auf der Umformung der Schwingungen eines Mechanismus der auf einem Schwimmittel angeordnet ist und einen Schwingungserzeuger darstellt, der die Wellenschwingungsenergie aufnimmt, in elektrische Energie beruht. Eine Besonderheit der Wellenenergieanlagen dieser Klasse ist der fehlende direkte Kontakt des Wassermediums mit den Arbeitsorganen der Energieanlage. Die Zuführung der Wellenenergie in den Schwingungserzeuger der Anlage geschieht infolge der Zusammenwirkung der Wellen nur mit dem Körper der Energieanlage, d.h. mit dem Schwimmittel.

Eine von derartigen Energieanlagen ist eine Anlage (JP-A-53-24578), die ein Gehäuse einschließt, in dessen Schwingungsmittelpunkt eine Stütze für einen Hebel vorhanden ist, während der Hebel selber mit einer Wälzbahn versehen ist. Auf dieser Bahn bewegt sich während der Gehäuseschwingungen ein Wälzkörper. An den Hebelenden sind Zugstangen angebracht, die sich relativ zum Gehäuse unter der Einwirkung des Wälzkörpers bewegen. Die bei der Zusstangenbewegung erzeugte Energie wird in eine herkömmliche Energieform, beispielsweise in elektrische Energie, umgewandelt. In dieser Anlage wird die geradlinige Bewegung des Wälzkörpers in eine hin- und hergehende Bewegung umgewandelt. Allerdings weisen die Anlagen dieses Typs eine niedrige spezifische Leistung auf.

EP 0 483 357 B1

Es ist ferner ein Verfahren zur Umformung der schwingenden Wellenbewegung in eine Drehbewegung bekannt, das auf der Erscheinung der vibrationsbedingten Aufrechterhaltung dieser Drehbewegung beruht (I.I. Blekhman "Synchronisation in Natur und Technik", 1981, Verlag "Nauka", Moskau, S. 142, 143, Abb.19), bei welcher die Vibration der Unwuchtdrehachse mit einer Frequenz ω bewirken kann, daß die Unwuchtmasse mit einer ω-Frequenz bzw. mit einem Vielfachwert derselben umlaufen wird. Diese Erscheinung wird als vibrationsbedingte Aufrechterhaltung der Drehbewegung bezeichnet. Allerdings findet der vibrationsbedingte Umlauf der Unwuchtmasse nur in dem Fall statt, wenn sich die Schwingungen nach dem harmonischen Gesetz mit der vorgegebenen ω-Frequenz ändern. Angesichts der Tatsache, daß die Meereswellenbewegung als ein schmalbandiger stochastischer Prozeß stattfindet, wird die Verwertung der beschriebenen Erscheinung für die Verformung der schwingenden Bewegung der Meereswellen in eine Drehbewegung wegen der komplizierten Abstimmung der Unwuchtdrehfrequenz auf die Schwingungsfrequenz der Achse der Unwuchtmasse bei Einwirkung von Meereswellenschwingungen erschwert.

Darüber hinaus ist dieses Verfahren kein Resonanzverfahren, weshalb die Effektivität der Energieentnahme in den nach diesem Verfahren arbeitenden Einrichtungen nicht hoch ist.

Außerdem ist eine Einrichtung (Zeitschrift "Vestnik mashinostroenia", Nr. 11, 1976, SS. 54 - 55, Beitrag "Mechanismus zur Umformung einer hin- und hergehenden Bewegung in eine Drehbewegung ohne kraftschlüssige Verbindung") bekannt, deren Funktion auf der Erscheinung einer gesteuerten dynamischen Resonanz beruht. Die die Resonanz gewährleistende Bedingung besteht in der Erzeugung einer gesteuerten Verbindung zwischen der umlaufenden Unwuchtmasse und der Außenschwingungsquelle bei Nachregelung der Parameter der Außenmediumschwingungen bzw. der Unwuchtmassenumlauffrequenz, was die Möglichkeit einer kontinuierlichen Überführung der Schwingungsenergie in die Drehbewegung der Unwuchtmasse zu realisieren erlaubt.

Bekannt ist ferner ein Verfahren zur Umformung der hin- und hergehenden Bewegung einer Unwuchtmasse in eine Drehbewegung derselben (SU-A-1285183), das in zusätzlicher Abstimmung der Umlauffrequenz der Unwuchtmasse auf die Schwingungsfrequenz ihrer Achse bei Welleneinwirkung durch Ändern der Exzentrizität des Unwuchtmassenmittelpunktes besteht, wo bei abnehmender Schwingungsfrequenz die Exzentrizität vergrößert, bei abnehmender Frequenz aber verkleinert wird, sowie eine Anlage zur Durchführung des Verfahrens, die eine Stütze enthält, auf der eine Unwuchtmasse mit Rollkörpern angeordnet ist, die auf dieser Stütze radial verschiebbar ist. Die Rollkörper wirken mit den mit der Unwuchtmasse gleichachsig angeordneten ringförmigen Führungen zusammen, die in Form von zwei abgeschnittenen, mit ihren größeren Grundflächen zueinander gekehrten Kegeln ausgeführt sind, die an ihren Seitenflächen ebene Abschnitte aufweisen, welche parallel zur Achse der Unwuchtmasse liegen, wobei auch ein Wellenparametergeber, eine Recheneinheit und eine Vorrichtung zur Verschiebung der Rollkörper längs der Achse der Unwuchtmasse vorhanden sind.

Die Entwicklung einer derartigen Anlage zur Durchführung des genannten Verfahrens hängt mit erheblichen konstruktionstechnologischen Schwierigkeiten zusammen.

Es ist ein Verfahren zur Wellenenergieumformung auf der Basis der Erscheinung der gesteuerten dynamischen Resonanz bekannt, das in einer Anlage (JP-A-62-1106) realisiert ist, die einen auf einem Schwimmittel installierten Schwingungserzeuger, der zwei in Gegenphase rotierende Unwuchtmassen besitzt, sowie einen Geschwindigkeitsregler einschließt, der mittels Wellen mit Unwuchtmassen verbunden ist und in dem die Umlauffrequenz der Unwuchtmassen mit der Schwingungsfrequenz des Schwimmittels solcherweise synchronisiert wird, daß die Wirkung der Trägheitskräfte der umlaufenden Unwuchtmassen in Gegenphase mit den Schwimmittelschwingungen liegt. Dabei nimmt bei kleiner werdender Schwingungsfrequenz des Schwimmittels die Umlauffrequenz der Unwuchtmassen ab, und umgekehrt.

Das genannte Verfahren setzt das Gleichsein der Umlauffrequenz der Unwuchtmasse mit der Frequenz f der Meereswellenschwingungen voraus und zwar:

$$f = \frac{V_o}{2 \pi R} \qquad\qquad (I)$$

wobei

$V_o$ = lineare Bewegungsgeschwindigkeit des Unwuchtmassenmittelpunktes beim Umlauf und
R = Rotationshalbmesser des Unwuchtmassenmittelpunktes sind.

Daraus kann die lineare Bewegungsgeschwindigkeit $V_o$ der Unwuchtmasse ermittelt werden, bei der eine Synchronisation möglich ist:

5

$$V_o = 2\pi R \cdot f \tag{2}$$

Außerdem gibt es eine weitere Bedingung, ohne deren Einhaltung kein Umlauf der Unwuchtmasse möglich ist.

Für den Umlauf der Unwuchtmasse im Schwerefeld der Erde ist es erforderlich, daß die kinetische Energie der Unwuchtmasse M die potentielle Energie, die zum Steigen des Unwuchtmassenmittelpunktes bis auf eine Höhe, die zwei Rotationshalbmessern des Massenmittelpunktes gleich ist, übertrifft, und zwar:

$$\frac{MV^2}{2} \geqslant M^2 gR \quad, \tag{3}$$

woraus folgt:

$$V = /4gR/^{1/2} \tag{4}$$

Andererseits muß die lineare Geschwindigkeit des Unwuchtmassenmittelpunktes beim Umlauf der linearen Geschwindigkeit des Massenmittelpunktes der umlaufenden Unwuchtmasse bei der Resonanz gleich sein, und zwar:

$$2\pi R \cdot f = /4gR/^{1/2} \tag{5}$$

Daraus errechnet sich der Rotationshalbmesser P des Unwuchtmassenmittelpunktes:

$$R = \frac{g}{\pi^2 \cdot f^2} \tag{6}$$

Diese Bedingung legt die Abmessungen der Unwuchtmassen beim Schwingungserzeuger fest.

Beispielsweise lassen sich die Abmessungen der Unwuchtmasse bei einem Wellengang mit der Stärke 5 folgenderweise ermitteln:

$$T = 6 \text{ s - Wellenperiode (f - 1/6 Hz)};$$
$$H = 3 \text{ m - Wellenhöhe (Wellenhöhe bei 3\%iger Sicherheit 2,0 - 3,5 m)}.$$

$$R = \frac{9,8}{3,14^2 \, (1/6)^2} = 35 \text{ m} \cdot$$

Die Schaffung von Unwuchtmassen derartiger Größe bereitet erhebliche technische Schwierigkeiten. Dabei führt diese Vergrößerung der Abmessungen der Unwuchtmassen zum beträchtlichen Ansteigen der Energieanlagenmasse.

Möglich ist eine Verkleinerung der Abmessungen der Unwuchtmassen bei der Anwendung von Schwungrädern mit im voraus ausgespeicherter mechanischer Energie, die die kinetische Energie der Unwuchtmasse um ein Mehrfaches übertrifft, für die Herbeiführung des Umlaufs der genannten Unwuchtmassen. Dies ist aber erreichbar, wenn die Masse der Schwungräder die Unwuchtmassen um ein Mehrfaches übersteigt, was die Energieanlage zusehens schwerer macht und die spezifische Leistung derselben beträchtlich herabmindert.

Darüber hinauf ist ein Verfahren zur Wellenenergieumformung mit Hilfe eines auf einem Schwimmittel angeordneten Schwingungserzeugers aus der nicht vorveröffentlichten PCT-Anmeldung SU 89/00303 ≙ EP-A-0 446 356 der gleichen Anmelder bekannt, der mindestens eine Unwuchtmasse besitzt, die auf einer Achse um dieselbe drehbar angebracht ist. Die Achse mit der Unwuchtmasse wird über dem Schwimmittel bis auf eine vorgegebene Höhe gehoben, es wird ein freier Fall der Achse mit der Unwuchtmasse von dieser Höhe herab bis zur Berührung der Achse mit dem Schwimmittel bei in bezug auf das Schwimmittel

6

waagerechter Lage der Unwuchtmasse sowie bei Speicherung der Energie in dieser Unwuchtmasse gewährleistet, danach erfolgt die Energieentnahme bei der Drehung der Unwuchtmasse um deren Achse um einen Winkel von 180° und dem nachfolgenden Hochsteigen der Achse mit der Unwuchtmasse bei waagerechter Lage der letzteren, wobei der freie Fall der Achse mit der Unwuchtmasse bis zur Berührung mit dem Schwimmittel und die Drehung der Unwuchtmasse während des Hochsteigens des Schwimmittels auf der Welle stattfindet, so daß im Augenblick der Drehung der Unwuchtmasse die Summierung der durch die Unwuchtmasse bei deren freiem Fall aufgespeicherten Energie mit der Wellenenergie erfolgt, die über das Schwimmittel zur Unwuchtmasse übertragen wird, während das Hochsteigen der Achse mit der Unwuchtmasse bis auf die vorgegebene Höhe und das Unterbringen der Unwuchtmasse in der Ausgangsstellung während des Wiedersteigens des Schwimmittels mit der Welle geschehen, wobei bei kleiner werdender Schwingungsfrequenz des Schwimmittels auf der Welle die Steighöhe der Achse mit der Unwuchtmasse größer, bei zunehmender Frequenz aber kleiner wird.

Das erwähnte Verfahren gestattet es, die Menge der in der Unwuchtmasse aufgespeicherten Energie beträchtlich zu vergrößern und sie bis zu einem Niveau von 180 - 200 J je Kilogramm (J/kg) der Unwuchtmasse in jeder Unwuchtschwingungsperiode zu bringen.

Dieses Verfahren wird durch eine Wellenenergieanlage realisiert, die ein Schwimmittel, das im Schwimmzustand verbleibt und unter der Welleneinwirkung schaukelt, ein auf dem Schwimmittel befestigtes hohles Gehäuse, in dem ein Schwingungserzeuger mit den Unwuchtmassen untergebracht ist, einen elektrischen Generator, der die Energieentnahme von den Unwuchtmassen gewährleistet, sowie einen Trägheitskraftgeber enthält. Überdies schließt die Energieanlage im Gehäuse vorhandene vertikale Führungen ein, an denen der Schwingungserzeuger bewegbar angeordnet ist, der eine Stütze darstellt, auf der Unwuchtmassen um ihre Achse drehbar angebracht sind. Die Stütze ist an den vertikalen Führungen über dieselben hin- und herverschiebbar montiert. Außerdem besitzt die Anlage eine Vorrichtung zur Fixierung und Begrenzung der Stützenverschiebung, die mit dem Trägheitskraftgeber verbunden ist.

Denkbar ist eine Ausführungsform der Wellenenergieanlage, in der als Unwuchtmassen elektrische Generatoren verwendet sind, welche auf zwei Lenkern um deren Achsen schwenkbar angebracht sind, wobei die Längsachsen der an der Stütze befestigten Mitnehmer zueinander und zur Längsachse der Stütze parallel sind, während auf den Ausgangswellen der Rotoren der elektrischen Generatoren Freilaufkupplungen und angetriebene Zahnräder angebracht sind, die mit den an der Stütze des Schwingungserzeugers befestigten Zahnrädern kinematisch verbunden sind.

Diese das genannte Verfahren realisierende Wellenenergieanlage besitzt einen höheren Wirkungsgrad als die bekannten Anlagen, jedoch erfolgt die Energieentnahme von der Unwuchtmasse in dieser Anlage nur während des Hochsteigens des Schwimmittels auf der Welle, so daß die Energie der herabfallenden Welle nicht verwertet wird.

Offenbarung der Erfindung

Der Erfindung liegt die Aufgabe zugrunde, ein Verfahren zur Wellenenergieumformung und eine umweltfreundliche, kompakte Wellenenergieanlage zur Durchführung desselben zu schaffen, in denen dank dem veränderten Prinzip der Zusammenwirkung des Schwimmittels mit dem Schwingungserzeuger in jeder der Perioden des Hoch- und Niedersteigens des Schwimmittels auf der Welle sowie dank einer entsprechenden Änderung der Konstruktion der Wellenenergieanlage eine Erhöhung der Menge der vom Schwingungserzeuger aufgespeicherten Energie bei gleichzeitiger Vereinfachung der Konstruktion der Anlage gewährleistet wird.

Diese Aufgabe wird dadurch gelöst, daß während jeder Periode der Aufwärts- und Abwärtsbewegung des Schwimmittels die Unwuchtmasse mehr als einmal um ihre Drehachse gedreht wird, während die Drehachse der Unwuchtmasse unter Einwirkung und in Einwirkrichtung des Schwimmittels mehrmals verschoben wird, wobei während jeder vollen Umdrehung der Unwuchtmasse innerhalb vorgegebener Zeitintervalle mindestens eine Verschiebung der Drehachse erfolgt, während bei jedem Wechsel der Perioden der Aufwärts- und Abwärtsbewegung des Schwimmittels auf der Welle die Verschiebungsrichtung der Drehachse unter Aufrechterhaltung der in der Unwuchtmasse aufgespeicherten Energie umgekehrt wird, wobei die Energieentnahme zusätzlich während der Abwärtsbewegung des Schwimmittels vorgenommen wird.

Zweckmäßigerweise erfolgt bei jeder vollen Umdrehung der Unwuchtmasse die einmalige Verschiebung der Drehachse während der Aufwärtsbewegung des Schwimmittels innerhalb eines Zeitintervalls, das einer Drehung der Unwuchtmasse während der Periode der Aufwärtsbewegung des Schwimmittels vorwiegend um den Winkelbereich von 0° bis 180° und während der Periode der Abwärtsbewegung des Schwimmittels einer Drehung der Unwuchtmasse vorwiegend um den Winkelbereich von 180° bis 360° entspricht,

7

wobei die Drehachse innerhalb des Zeitintervalls, das einer Drehung der Unwuchtmasse während der Periode der Aufwärtbewegung des Schwimmittels vorwiegend um den Winkelbereich von 180° bis 360°, während der Periode der Abwärtsbewegung des Schwimmittels einer Drehung derselben vorwiegend um den Winkelbereich von 0° bis 180° entspricht, im wesentlichen unbeweglich bleibt.

Dieses Verfahren, bei dem dank des mehrfachen Zusammenwirkens der Achse der umlaufenden Unwuchtmasse des Schwingungserzeugers mit dem Schwimmittel während jeder Periode der Auf- und Abwärtsbewegung sowie dank der Aufrechterhaltung (bei jedem Wechsel der Periode der Auf- und Abwärtsbewegung des Schwimmittels) der in der Unwuchtmase in der vorangegangenen Periode aufgespeicherten Energie eine wesentliche Erhöhung der in der Unwuchtmasse aufgespeicherten Energiemenge gengenüber den bekannten Verfahren und dem nächstkommenden, nicht vorveröffentlichen Stand der Technik gemäß der EP-A-0 446 356 gewährleistet wird, gestattet es, die Menge der dem Schwingungserzeuger entnommenen Energie zu vergrößeren.

Die Aufgabe wird ferner gelöst durch eine Anlage zur Wellenenergieumformung der eingangs genannten Art, die dadurch gekennzeichnet ist, daß mindestens eine vertikale Führung vorgesehen ist, die in der Nähe des Schwimmittels angebracht ist und die Wellenschwingungen minimal aufnimmt, und ein drittes Mittel zum Begrenzen der Bewegung der Stütze vorgesehen ist, das mit der Führung mechanisch gekoppelt und durch die Bewegungsrichtung des Schwimmittels auf der Welle steuerbar ist.

Hierbei ist es zweckmäßig, wenn das dritte Mittel in die Bewegungsbahn der Stütze einfahrbare Anschläge umfaßt.

Dabei gestattet es das dritte Mittel zur Begrenzung der Verschiebung der beweglichen Stütze dadurch, daß es die Wellenschwingungen minimal aufnimmt und mit der beweglichen Stütze periodisch zusammenwirkt, bei welchselnden Perioden der Aufwärts- und Abwärtsbewegung des Schwimmittels auf der Welle die in der Unwuchtmasse während dieser vorhergehenden Periode aufgespeicherte Energie während dieser beiden Perioden der Aufwärts- und Abwärtsbewegung aufrechtzuerhalten. Da die Aufspeicherung und Entnahme der Energie während beider Perioden erfolgt, wird eine erhebliche Erhöhung der Menge der dem Schwingungserzeuger entnommenen Energie ermöglicht.

Das dritte Mittel kann aber auch mindestens zwei, mit der Stütze verbundene Hydraulikzylinder umfassen, wobei der Kolben eines von ihnen mit dem Schwimmittel, der Kolben des anderen mit der Führung verbunden ist und die Zylinderräume eines jeden Hydraulikzylinders durch jeweils ein Umsteuerventil miteinandner verbunden sind, das mit den Drehachsen der Unwuchtmassen kinematisch verbunden ist.

Dabei gestattet es das dritte Mittel zur Begrenzung der Verschiebung der beweglichen Stütze, das die Fixierung bzw. Trennung der Stütze vom Schwimmittel bzw. der Führung, die die Wellenschwingungen minimal aufnimmt, in regelmäßigen Zeitabständen vornimmt, geradlinige Bewegungsbahnabschnitte der Unwuchtmassen mit dem Schwimmittel so gut wie auszuschließen und die Umlauffrequenz der Unwuchtmassen sowie die Anzahl der Zusammenwirkungen der beweglichen Stütze des Schwingungserzeugers mit dem Schwimmittel unter Erhaltung der nach jedem Wchsel der Perioden der Aufwärts- und Abwärtsbewegung des Schwimmittels auf der Welle der während der vorhergehenden Periode in den Unwuchtmassen aufgespeicherten Energie zu erhöhen.

Diese konstruktive Ausführung der Wellenenergieanlage, die die Aufspeicherung und Entnahme der Energie sowohl während der Perioden des Hochsteigens als auch während der Periode Niedersteigens des Schwimmittels auf der Welle vornimmt, ermöglicht eine beträchtliche Erhöhung der Menge der dem Schwingungserzeuger entnommenen Energie gegenüber den bekannten technischen Lösungen.

Kurze Beschreibung der Zeichnungen

Im folgenden wird die Erfindung an Ausführungsbeispielen unter Bezugnahme auf beiliegenden Zeichnungen erläutert, in denen es zeigt:
Fig. 1, 2, 3, 4, 5, 6 die schematische Darstellung der erfindungsgemäßen Wellenenergieanlage, die das Verfahren zur Wellenumformung realisiert;
Fig. 7 eine der möglichen Ausführungsformen der erfindungsgemäßen Wellenenergieanlage;
Fig. 8 einen Schnitt nach Linie VIII - VIII der Fig.7;
Fig. 9 eine weitere mögliche Ausführungsform der erfindungsgemäßen Wellenenergieanlage.

Beste Ausführungsformen der Erfindung

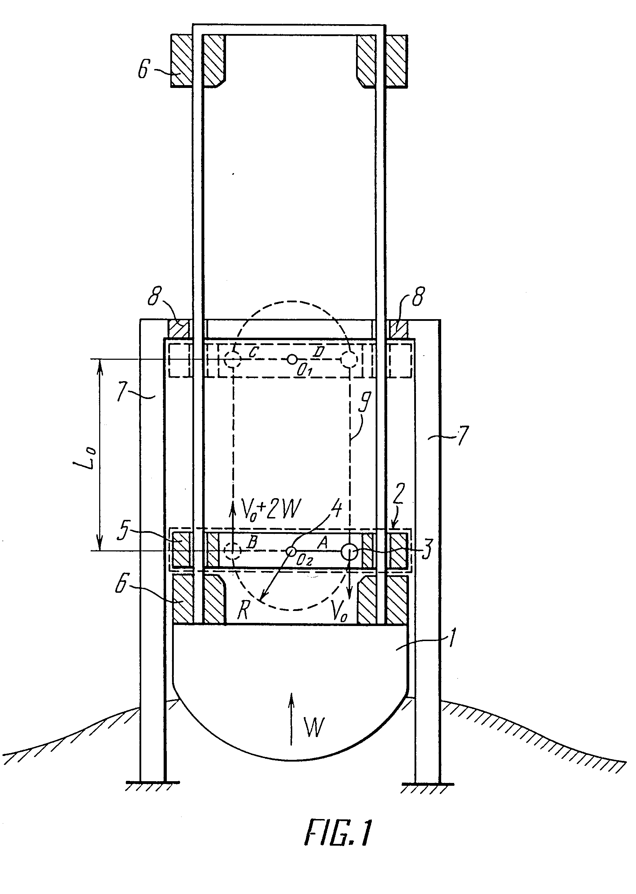

Das Verfahren zur Umwandlung der Wellenenergie in eine nutzbare Energieform besteht darin, daß auf einem Schwimmittel 1 (Fig. 1) ein Schwingungserzeuger 2 (in der Zeichnung durch gestrichelte Linien angedeutet) mit einer Unwuchtmasse 3 angeordnet wird, die um ihre eigene Achse 4 drehbar ist. Die Achse 4 ist auf einer beweglichen Stütze 5 angebracht, die in bezug auf eine feststehende Stütze 6 hin- und herverschiebbar ist; im Wassermedium werden dabei mindestens zwei vertikale Führungen 7 untergebracht, die die Wellenschwingungen minimal aufnehmen und mit dem Schwingungserzeuger 2 zusammenwirken. Außerdem wird an den Führungen 7 ein Mittel 8 zur Begrenzung der Verschiebung der beweglichen Stütze 5 des Schwingungserzeugers 2 angebracht.

Nachstehend sollen physikalische Prozesse betrachtet werden, die bei der Umwandlung der Wellenenergie in die kinetische Rotationsenergie der Unwuchtmasse 3 ablaufen.

Das Mittel 8 zur periodischen Begrenzung der Verschiebung der beweglichen Stütze 5 ist ausgefahren.

Erfindungsgemäß wird die Achse 4 (Fig. 1) mit der Unwuchtmasse 3 über dem Schwimmittel 1 bis auf eine vorgegebene Höhe $L_o$ hochgehoben (d. h. also, daß der Unwuchtmasse 3 eine für ihre Anfangsbewegung benötigte Energie erteilt wird), wobei die bewegliche Stütze 5 am Begrenzungsmittel 8 anliegt und die Unwuchtmasse 3 in bezug auf das Schwimmittel 1 waagerecht angeordnet wird. In dieser Stellung beträgt die potentielle Energie der Unwuchtmasse 3:

$$E_p = M \cdot g \cdot L_o, \tag{7}$$

wo es bedeutet:

M - die Masse der Unwucht 3;

g - die Fallbeschleunigung des Körpers.

Im Augenblick des Hochsteigens des Schwimmittels 1 auf der Welle wird ein freier Fall der Unwuchtmasse 3 von der Höhe $L_o$ herab bis zur Berührung der beweglichen Stütze 5 mit der feststehenden Stütze 6 eingeleitet, die auf dem Schwimmittel 1 angeordnet ist (die Lage der Unwuchtmasse 3 ist durch eine Vollinie A angedeutet). Beim Fallen der Unwuchtmasse 3 von der Höhe $L_o$ herab findet das Aufspeichern der Energie in der Unwuchtmasse 3 statt. Dabei geht die aufgespeicherte potentielle Energie der Unwuchtmasse 3 in die kinetische Energie $E_K$ über, die beträgt:

$$E_k = E_I = \frac{M \, V_o^2}{2}, \tag{8}$$

wo es bedeutet:

$V_o$ - die lineare Anfangsgeschwindigkeit des Massenmittelpunktes der Unwuchtmasse 3, die beträgt:

$$V_o = /2L_o \cdot g/^{1/2},$$

$E_I$ - die Menge der in der Unwuchtmasse 3 aufgespeicherten Energie vor dem Beginn der Drehung derselben um die Achse 4 (Linie A).

Da sich das Schwimmittel 1 gemeinsam mit der feststehenden Stütze 6 mit einer Geschwindigkeit W entgegen der herabfallenden Unwuchtmasse 3 bewegt, so beträgt die lineare Geschwindigkeit $V_1$ desselben im Augenblick der Berührung der feststehenden Stütze 6 mit der Achse 4:

$$V_1 = V_o + W \tag{10}$$

Mit derselben Geschwindigkeit setzt die Drehbewegung der Unwuchtmasse 3 um die Achse 4 mit dem Halbmesser R ein. Bei einer Drehung der Unwuchtmasse 3 um ihre Achse 4 um den Winkel von 0 bis 180° kommt es unter Einwirkung des auf der Welle hochsteigenden Schwimmittels 1 zur Verschiebung der Drehachse 4 der Unwuchtmasse 3, wobei die Unwuchtmasse 4 eine horizontale Lage auf der zur Achse 4 entgegengesetzten Seite einnimmt (die gestrichelte Linie B der Lage der Unwuchtmasse 3). Da sich die feststehende Stütze 6 mit dem Schwimmittel 1 mit einer Geschwindigkeit W bewegen, beträgt die absolute lineare Geschwindigkeit $V_2$ des Massenmittelpunktes der Unwuchtmasse 3:

$$V_2 = V_o + 2W \tag{11}$$

Die Menge der in der Unwuchtmasse 3 aufgespeicherten Energie $E_2$ nach deren Übergang aus der einen horizontalen Stellung (Vollinie A) in die andere horizontale Stellung (gestrichelte Linie B) beträgt:

$$\bar{E}_2 = \frac{M(V_0 + 2W)^2}{2} \tag{12}$$

Die in der Unwuchtmasse 3 bei deren freiem Fall bis zur Berührung der beweglichen Stütze 5 mit dem Schwimmittel 1 aufgespeicherte Energie beträgt zusammen mit der Wellenenergie, die über das Schwimmittel 1 auf die Unwuchtmasse 3 bei deren Drehung um ihre Achse 4 um einen Winkel von 180° übertragen wird:

$$\bar{E}_3 = \frac{M(V_0 + 2W)^2 - M V_0^2}{2}, \tag{13}$$

woraus folgt:

$$E_3 = 2M \cdot W (V_0 + W) \tag{14}$$

Danach wird aufgrund von Trägheitskräften das Hochsteigen der Achse 3 mit der Unwuchtmasse 4 bei horizontaler Lage der letzteren bis zur Berührung der beweglichen Stütze 5 des Schwingungserzeugers 2 mit dem Mittel 8 zur Begrenzung seiner Aufwärtsbewegung gewährleistet.

Da das Schwimmittel 1 dabei weiter hochsteigt und das Mittel 8 zur Begrenzung der Verschiebung des Schwingungserzeugers 2 unbeweglich bleibt, nimmt der Abstand $L_0$ zwischen der oberen und der unteren Stellung ($O_1,O_2$) der Drehachse 4 der Unwuchtmasse 3 ab. Zugleich nimmt infolge der kleiner werdenden Länge der geradlinigen Bewegungsabschnitte des Massenmittelpunktes der Unwuchtmasse 3 die Zeit einer vollen Umdrehung der Unwuchtmasse 3 um ihre Achse 4 ab, d.H. die Umlauffrequenz der Unwuchtmasse 3 um ihre Achse 4 und somit die gesamte Umdrehungszahl der Unwuchtmasse während der Periode des Hochsteigens des Schwimmittels 1 auf der Welle nehmen zu.

Nachdem die bewegliche Stütze 5 mit der Unwuchtmasse 3 das Mittel 8 zur Begrenzung der Verschiebung der beweglichen Stütze 5 (gestrichelte Linie C) erreicht hat, dreht sich die Unwuchtmasse 3 aufgrund von Trägheitskräften um den Winkel von 180 bis 360° um die Achse 4 und nimmt die Ausgangsstellung auf der zur Drehachse 4 entgegengesetzten Seite (gestrichelte Linie D) ein, von wo ihr Fallen erneut beginnt.

Also wird der während des Hochsteigens des Schwimmittels 1 auf der Welle ablaufende Zyklus, der die Verschiebung der Drehachse 4 der Unwuchtmasse 3 unter Einwirkung des Schwimmittels 1, das Hochsteigen der Drehachse 4 der Unwuchtmasse 3 bis auf eine vorgegebene Höhe, die Rückkehr der Unwuchtmasse 3 in die Ausgangsstellung und das darauffolgende Fallen derselben einschließt, mehrmals wiederholt. Dabei bewegt sich der Massenmittelpunkt der Unwuchtmasse 3 auf einer vorgegebenen Bahn 9.

Es soll nun die Geschwindigkeitsänderung des Massenmittelpunktes der Unwuchtmasse 3 und die Energieänderung der Unwuchtmasse 3 bei kleiner werdendem Abstand L zwischen der oberen und unteren Stellung $O_1$ und $O_2$ der Drehachse 4 der Unwuchtmasse 3 im oberen und unteren Punkt der Drehung der Unwuchtmasse 3 während der Periode des Hochsteigens des Schwimmittels 1 auf der Welle ermittelt werden. Der maximale Wert von L entspricht der Schwingungsamplitude $L_0$ des Schwimmittels 1. Da während eines jeden Drehungszyklus der Unwuchtmasse 3 um den Winkel von 0 bis 180° die Unwuchtmasse 3 eine Geschwindigkeitszunahme dank der Verschiebung der Drehachse 4 der Unwuchtmasse 3 unter Einwirkung des Schwimmittels 1 erhält, die $\Delta V = 2W$ beträgt, und während eines jeden Drehungszyklus der Unwuchtmasse 3 um den Winkel von 180 bis 360° die Geschwindigkeit des Massenmittelpunktes der Unwuchtmasse 3 keine Änderung erfährt, ist demgemäß die Geschwindigkeitsänderung des Massenmittelpunktes der Unwuchtmasse 3 zur Umdrehungszahl der Unwuchtmasse 3 um den Winkel von 0 bis 360° während der Periode des Hochsteigens des Schwimmittels 1 proportional:

$$dv = 2W \cdot \frac{Vdt}{2L} \tag{15}$$

Indem man die Beziehung zwischen der Steiggeschwindigkeit des Schwimmittels 1 und dem Abstand zwischen den Punkten $O_1$ und $O_2$ der Drehung der Unwuchtmasse 3 zugrundelegt, erhält man:

$$W = -\frac{dL}{dt} \, , \tag{16}$$

$$\frac{dv}{dt} = -\frac{dL}{L} \tag{17}$$

Bei Integrieren der Gleichung (17) erhält man eine Gleichung für die Geschwindigkeit und die kinetische Energie der Unwuchtmasse 3:

$$\frac{V}{V_o} = \frac{L_o}{L} \tag{18}$$

$$\frac{E}{E_o} = \left[\frac{L_1}{L}\right]^2 \, , \tag{19}$$

wo es bedeutet:

$L_o$ -     den (maximalen) Anfangsabstand zwischen der oberen und der unteren Lage der Drehachse 4 der Unwuchtmasse 3;

$V_o$ -     die Anfangsgeschwindigkeit des Massenmittelpunktes der Unwuchtmasse 3;

$E_o$ -     die kinetische Anfangsenergie der Unwuchtmasse 3.

Daraus folgt, daß bei ausreichend großer Verringerung des Abstandes zwischen der oberen und unteren Lage der Drehachse 4 der Unwuchtmasse 3/L << $L_o$) die Energie E der Unwuchtmasse 3 einen sehr großen Wert (E $\gg$ $E_o$) erreichen kann.

Bei nachfolgendem Abfallen der Wellenfront wird die Bewegungsrichtung des Schwimmittels 1 umgekehrt. Das Schwimmittel 1 sinkt mit einer Geschwindigkeit W herab, und der Abstand zwischen der oberen und der unteren Lage der Drehachse 4 der Unwuchtmasse 3 beginnt größer zu werden. Dies kann die rückwärtige Energieübertragung von der Unwuchtmasse 3 auf das Schwimmittel 1 veranlassen.

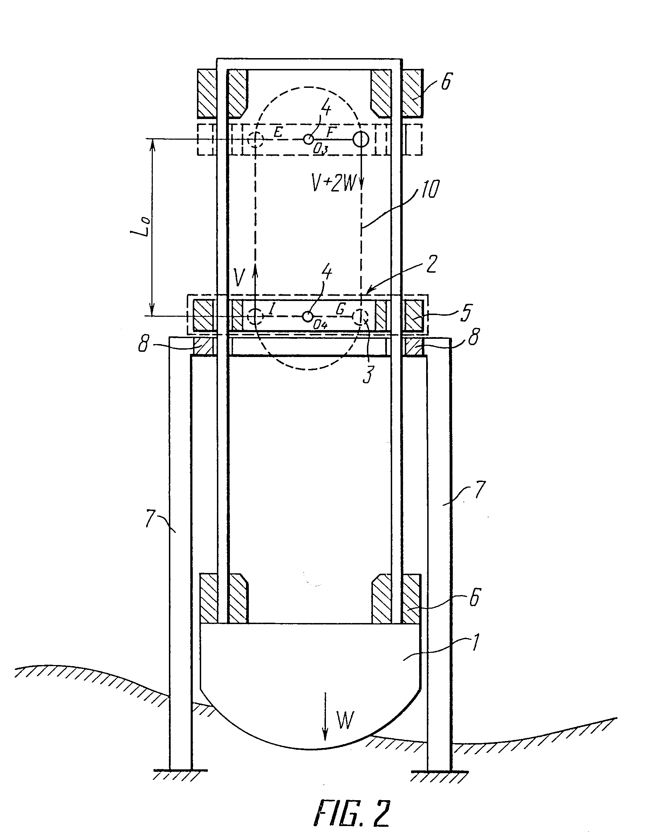

Zur Vermeidung dieses nachteiligen Effektes wird im Augenblick des Hochsteigens der Unwunchtmasse 3 (Fig. 2) das Mittel 8 zur Begrenzung der Verschiebung der beweglichen Stütze 5 mit der Unwuchtmasse 3 weggenommen, und die bewegliche Stütze 5 mit der Unwuchtmasse 3 steigt bei horizontaler Lage der letzteren so lange hoch, bis die bewegliche Stütze 5 des Schwingungserzeugers 2 die obere feststehende Stütze 6 des Schwimmittels 1 (gestrichelte Linie E) erreicht hat.

Nachdem die bewegliche Stütze 5 die feststehende Stütze 6 erreicht hat, dreht sich die Unwuchtmasse 3 aufgrund von Trägheitskräften um den Winkel von 180 bis 360° um die Achse 4 und nimmt die Ausgangslage auf der bezüglich der Achse 4 entgegengesetzten Seite (Vollinie F) ein, von wo ihr Fallen erneut beginnt. Da die feststehende Stütze 6 gemeinsam mit dem Schwimmittel 1 mit einer Geschwindigkeit W herabsinkt, so erhält der Massenmittelpunkt der Unwuchtmasse 3 zum Zeitpunkt der Einnahme der Ausgangsstellung (Vollinie F) eine Geschwindigkeitszunahme $\Delta$ V = 2 W.

Vor dem Augenblick der Drehung der Unwuchtmasse 3 um die Achse 4 um den Winkel von 180 bis 360° wird das Mittel 8 zur Begrenzung der Verschiebung der beweglichen Stütze 5 ausgefahren, wodurch die bewegliche Stütze 5 des Schwingungserzeugers 2 nach den erfolgten freien Fall zur Anlage am Mittel 8 zur Begrenzung der Bewegungen der beweglichen Stütze 5 (gestrichelte Linie G) kommt.

Ferner dreht sich die Unwuchtmasse 3 aufgrund von Trägheitskräften um den Winkel von 0 bis 180° um die Achse 4 und nimmt die horizontale Lage auf der bezüglich der Achse 4 entgegengesetzten Seite (gestrichelte Linie J) ein.

Da das Schwimmitel 1 mit der feststehenden Stütze 6 weiter herabsinkt und das Mittel 8 zur Begrenzung der Verschiebung der beweglichen Stütze 5 des Schwingungserzeugers 2 keine Wellenschwingungen aufnimmt, so nimmt der Abstand $L_o$ zwischen der oberen und der unteren Lage der Drehachse 4 der Unwuchtmasse 3 ab.

Des weiteren beginnt die Unwuchtmasse 3, sich aus der horizontalen Lage (gestrichelte Linie J) unter Einwirkung von Trägheitskräften nach oben bis zum Kontakt der beweglichen Stütze 5 des Schwingungserzeugers 2 mit der feststehenden Stütze 6 (gestrichelte Linie E) zu bewegen.

Somit wiederholen sich während des Niedersteigens des Schwimittels 1 der Steigzyklus der Drehachse 4 mit der Unwuchtmasse 3 bis auf die vorgegebene höhe, die Einnahme der Ausgangsstellung durch die Unwuchtmasse 3 und das Fallen derselben vielfach. Dabei bewegt sich der Massenmittelpunkt der Unwuchtmasse 3 auf einer geschlossenen Bahn 10.

Also ist die Unwuchtmasse 3 des Schwingungserzeugers 2 bei einem jeden Wechsel der Perioden des hoch- und Niedersteigens des Schwimmittels 1 auf der Welle imstande, die während der vorhergehenden Periode aufgespeicherte Energie aufrechtzuerhalten und die Energie bei jeder nachfolgenden Bewegung der Drehachse 4 der Unwuchtmasse 3 unter Einwirkung des Schwimmittels 1 sowohl während der Periode des Hochsteigens als auch während der Periode des Niedersteigens desselben auf der Welle immer weiter zu speichern.

Die Effektivität der vorgeschlagenen technischen Lösung kann man an einem konkreten Beispiel bei folgenden Ausgangsparametern veranschaulichen. Die Masse M der Unwucht 3 wird gleich 1000 kg angesetzt, der Drehungshalbmesser R des Massenmittelpunktes der Unwuchtmasse 3 auf der Achse 4 gleich 1 m, der Anfangsabstand zwischen der oberen und unteren Stellung der Drehachse 4 der Unwuchtmasse 3 gleich 5 m, der Endabstand zwischen der oberen und unteren Stellung der Drehachse 4 der Unwuchtmasse 3 gleich 2 m. Die lineare Ausgangsgeschwindigkeit des Massenmittelpunktes der Unwuchtmasse 3, bei deren Erreichen die Energieentnahme von der Unwuchtmasse 3 beginnt, wird dabei gleich 50 m/s, die mittlere Steighöhe der Welle bei einem Wellengang mit der Stärke 5 gleich 3 m angesetst.

Die Menge der in der Unwuchtmasse 3 während einer Periode des Hochsteigens des Schwimmittels 1 auf der Welle aufgespeicherten Energie wird aus einer folgenden Beziehung (19) ermittelt:

$$E_0 = \frac{M \, V_0^2}{2} = \frac{1 \cdot 10^3 / 50 /^2}{2} = 1{,}25 \cdot 10^0 \, J,$$

$$\frac{L_0}{L} = \frac{5}{2} = 2{,}5,$$

$$E = E_0 / \frac{L_0}{L} /^2 = 1{,}25 \cdot 10^0 . / 2{,}5 /^5 = 7{,}8 \cdot 10^0 \, J.$$

Dann verdoppelt sich die Menge der in der Unwuchtmasse 3 während der beiden Perioden (Hochsteigen und Niedersteigen) des Schwimmittels 1 auf der Welle 1 aufgespeicherten Energie und beträgt demnach:

$$2 \, E = 2.7.8.10^\circ J = 15{,}6.10^\circ J.$$

Also ist aus den angeführten Überlegungen und analytischen Formeln zu ersehen, daß die Verwertung des Effektes der mehrmaligen Verschiebung der Drehachse 4 der Unwuchtmasse 3 unter Einwirkung des Schwimmittels 1 in regelmäßigen Zeitabständen während einer jeden Periode des Hochsteigens und Wiedersteigens des Schwimmittels 1 auf der Welle es gestattet, die Menge der aufgespeicherten Energie gegenüber den bisher bekannten technischen Lösungen erheblich zu vergrößern, wobei die Umkehr der Bewegungsrichtung der Drehachse 4 mit der Unwuchtmasse 3 bei einem jeden Wechsel der Perioden des Hochsteigens und Niedersteigens des Schwimmittels 1 auf der Welle die Möglichkeit bietet, die in der Unwuchtmasse 3 während der vorhergehenden Periode aufgespeicherte Energie aufrechtzuerhalten und eine Vergrößerung der Menge der dem Schwingungserzeuger 2 entnommenen Energie sicherzustellen.

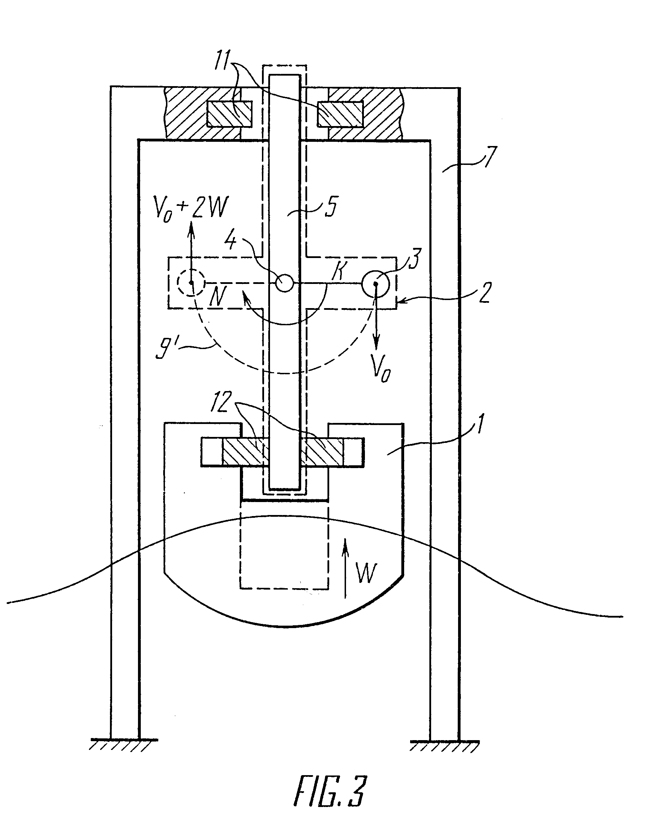

Eine weitere Realisierungsmöglichkeit des Verfahrens zur Umwandlung der Wellenenergie in eine nutzbare Energieform besteht darin, daß auf dem Schwimmittel 1 (Fig. 3) der Schwingungserzeuger 2 (in der Zeichnung durch gestrichelte Linien angedeutet) mit der Unwuchtmasse 3 angeordnet wird, die auf der beweglichen Stütze 5 um die Achse 4 drehbar angebracht ist. Im Wassermedium aber werden außerhalb des Schwimmittels 1 mindestens zwei vertikale Führungen 7 angeordnet, die die Wellenschwingungen minimal aufnehmen und mit dem Schwingungserzeuger 2 zusammenwirken. Darüber hinaus werden an den vertikalen Führungen 7 und auf dem Schwimmittel 1 jeweilige Vorrichtungen 11 und 12 zur Fixierung der beweglichen Stütze 5 zwecks periodischer Verbindung bzw. Trennung der beweglichen Stütze 5 von den vertikalen Führungen 7 und vom Schwimmittel 1 angebracht.

Es sollen nun physikalische Prozesse, die bei der Umformung der Wellenenergie in die kinetische Bewegungsenergie der Unwuchtmasse 3 unter Einwirkung des Schwimmittels 1 ablaufen, sowie ein entsprechendes Schema der Energieaufspeicherung (Fig. 3, 4, 5, 6) betrachtet werden.

Erfindungsgemäß wird dem Massenmittelpunkt der Unwuchtmasse 3 eine Anfangsbewegungsgeschwindigkeit $V_0$ erteilt.

Danach wird während der Periode des Hochsteigens des Schwimmittels 1 auf der Welle (Fig. 3) im Anfangsaugenblick der Drehung der Unwuchtmasse 3 um den Winkel von 0° (Vollinie K) bis 180° mit Hilfe der Vorrichtung 12 zur Fixierung der beweglichen Stütze 5 diese bewegliche Stütze 5 am Schwimmittel 1 fixiert und gleichzeitig mit Hilfe der Fixiervorrichtung 11 die starre mechanische Verbindung der beweglichen Stütze 5 mit den vertikalen Führungen 7 gelöst. Im Ergebnis vorgenommener Handlungen steigt die bewegliche Stütze 5 mit dem Schwimmittel 1 mit einer Steiggeschwindigkeit des Schwimmittels 1 auf der Welle, die gleich W ist, noch. Dabei nimmt die lineare Geschwindigkeit des Massenmittelpunktes der Unwuchtmasse 3 um den Faktor 2 (im vorstehenden bereits beschrieben) zu und wird bei der Drehung der Unwuchtmasse um 180° (gestrichelte Linie N) gleich $V_o$ - 2 W.

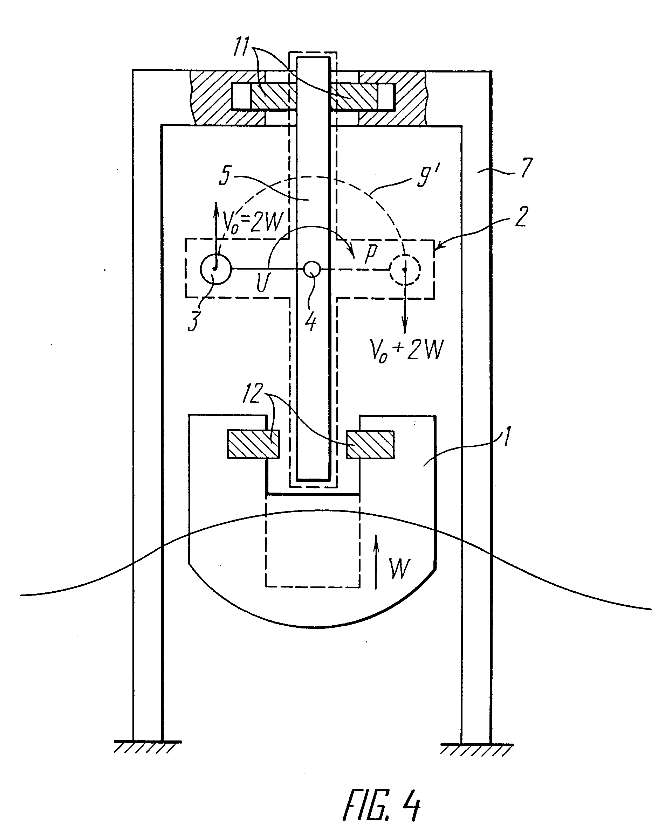

Bei weiterer Drehung der Unwuchtmasse 3 (Fig. 4) um die Achse 4 um den Winkel von 180 bis 360° wird im Anfangsaugenblick der Drehung (Vollinie U) mit Hilfe der Vorrichtung 12 die starre mechanische Verbindung der beweglichen Stütze 5 mit dem Schwimmittel 1 gelöst und gleichzeitig mit Hilfe der Fixiervorrichtung 11 die bewegliche Stütze 5 an den vertikalen Führungen 7 fixiert.

Im Ergebnis der vorgenommenen Handlungen wird innerhalb dieses Zeitintervalls eine gemeinsame Bewegung der beweglichen Stütze 5 mit dem Schwimmittel 1 sowie die Übertragung der Energie von der umlaufenden Unwuchtmasse 3 zurück zum Schwimmittel 1 verhindert.

Dadurch, daß die bewegliche Stütze 5 in diesem Zeitintervall an den vertikalen Führungen 7 fixiert ist, die im Wassermedium derart angeordnet sind, daß sie die Wellenschwingungen nur minimal aufnehmen, dreht sich die Unwuchtmasse 3 um die Achse 4 um den Winkel von 180 bis 360° (gestrichelte Linie P) mit einer gleichbleibenden Geschwindigkeit, die $V_o$ + 2 W beträgt.

Bei weiterer Drehung der Unwuchtmasse 3 um den Winkel von 0 bis 180° und weiter von 180 bis 360° wiederholen sich die vorbeschriebenen Operationen und deren Aufeinanderfolge vielfach.

Also vollführt die Unwuchtmasse 3 während der Periode des Hochsteigens des Schwimmittels 1 auf der Welle mehrmalige volle Umdrehungen um die Achse 4, die sich unter Einwirkung des Schwimmittels 1 vielfach bewegt, wobei die lineare Geschwindigkeit des Massenmittelpunktes der Unwuchtmasse 3 während jeder vollen Umdrehung Zunahmen erhält und einen Betrag von V = $V_o$ + 2 W • n erreicht, wo n die Zahl der vollen Umdrehungen der Unwuchtmasse 3 um die Achse 4 bedeutet.

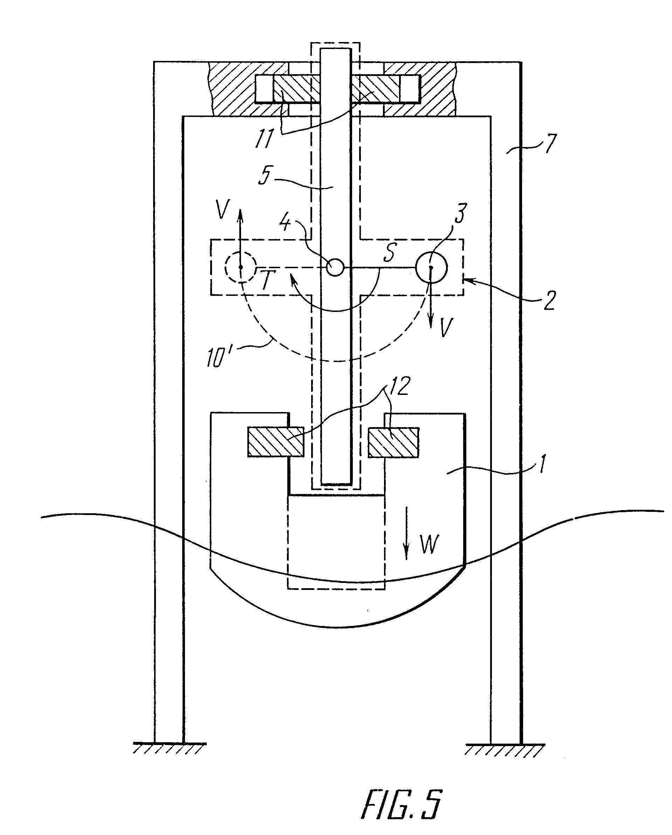

Während der Periode des Herabsinkens des Schwimmittels 1 (Fig. 5) auf der Welle verläuft der Prozeß der Energieaufspeicherung in der Unwuchtmasse 3 in ähnlicher Weise.

So wird im Anfangsaugenlick der Drehung der Unwuchtmasse 3 um den Winkel von 0° (Vollinie S) bis 180° die bewegliche Stütze 5 mit Hilfe der Fixiervorrichtung 11 an den vertikalen Führungen 7 fixiert und gleichzeitig mit Hilfe der Fixiervorrichtung 12 die starre mechanische Verbindung der beweglichen Stütze 5 mit dem Schwimmittel 1 gelöst.

Im Ergebnis der vorgenommenen Handlungen wird in diesem Zeitintervall eine gemeinsame Bewegung der beweglichen Stütze 5 mit dem Schwimmittel 1 und die Übertragung der Energie von der umlaufenden Unwuchtmasse 3 zurück zum Schwimmittel 1 verhindert.

Dadurch, daß die bewegliche Stütze 5 in diesem Zeitintervall an den vertikalen Führungen 7 fixiert ist, die im Wassermedium solcherweise angeordnet sind, daß sie die Wellenschwingungen nur minimal aufnehmen, dreht sich die Unwuchtmasse 3 um die Achse 4 um den Winkel von 180 bis 360° (gestrichelte Linie T) mit einer gleichbleibenden Geschwindigkeit, die V = $V_o$ + 2 Wn beträgt.

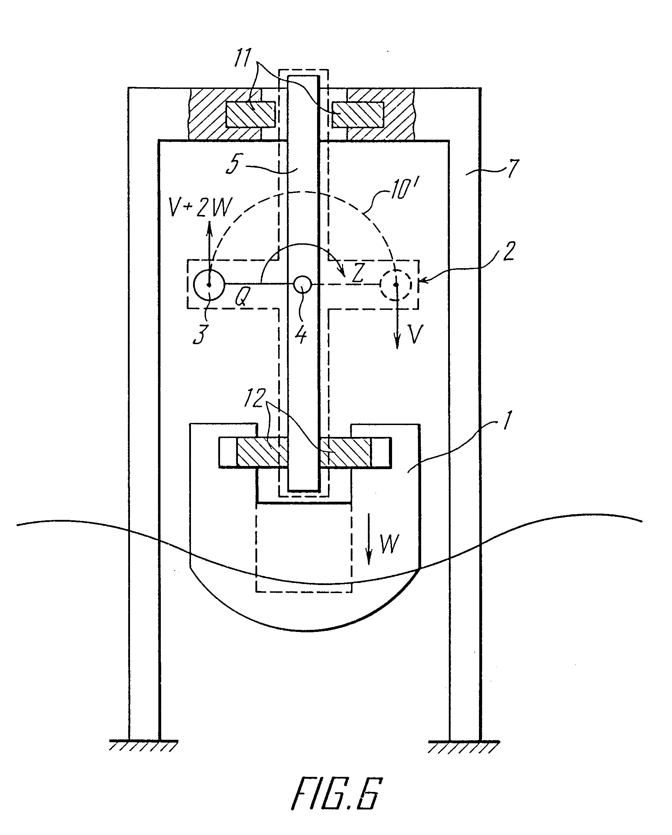

Bei weiterer Drehung der Unwuchtmasse 3 (Fig. 6) um den Winkel von 180 bis 360° um die Achse 4 wird die bewegliche Stütze 5 im Anfangsaugenblick der Drehung (Vollinie Q) mit Hilfe der Fixiervorrichtung 12 am Schwimmittel 1 fixiert und gleichzeitig mit Hilfe der Fixiervorrichtung 11 die starre mechanische Verbindung der beweglichen Stütze 5 mit den vertikalen Führungen 7 gelöst.

Im Ergebnis der vorgenommenen Handlungen sinkt die bewegliche Stütze 5 mit dem Schwimmittel 1 in diesem Zeitintervall mit der Sinkgeschwindigkeit des Schwimmittels 1, die W beträgt, herab. Dabei nimmt die lineare Geschwindigkeit des Massenmittelpunktes der Unwuchtmasse 3 um den Betrag 2W zu und wird gleich V + 2 W.

Also nimmt die lineare Geschwindigkeit des Massenmittelpunktes der Unwuchtmasse 3 bei mehrmaliger Wiederholung dieser Operationen während einer jeden Drehung der Unwuchtmasse 3 um den Winkel von 0 bis 360° um den Betrag 2W zu. Die Gesamtzunahme der linearen Geschwindigkeit des Massenmittelpunktes der Unwuchtmasse 3 während einer Periode des Hochsteigens bzw. Niedersteigens des Schwimmittels 1 beträgt dabei:

$$\Delta V = 2n W, \qquad\qquad (20)$$

wo n die Zahl der Umdrehungen der Unwuchtmasse 3 um die Achse 4 während einer Periode des Hochsteigens bzw. Niedersteigens des Schwimmittels 1 auf der Welle bedeutet.

Die Menge der in der Unwuchtmasse 3 aufgespeicherten Energie beträgt dabei:

$$E = EK - E_o, \tag{21}$$

wo

$$E_o = \frac{M V_o^2}{2}$$

die kinetische Anfangsenergie der Unwuchtmasse 3 ist;

$$E_K = \frac{M (V_o + 2Wn)^2}{2}$$

die kinetische Endenergie der Unwuchtmasse 3 ist und M die Masse der Unwucht 3 bedeutet.

Hieraus ergibt sich:

$$\Delta E = \frac{M(V_o + 2\,W.n)^2}{2} - \frac{M V_o^2}{2} =$$
$$= 2\,M.W.n(V_o + Wn). \tag{22}$$

Die dargestellte Ausführungsvariante des Verfahrens zur Wellenenergieumformung gestattet es, dank der Einwirkung des Schwimmittels 1 die Verschiebungen der Drehachse 4 der Unwuchtmasse 2 streng innerhalb der vorgegebenen Zeitintervalle vorzunehmen, die den bestimmten Bewegungsbahnabschnitten 9', 10' (Fig. 3, 4, 5, 6) der Unwuchtmasse 3 um die Achse 4 entsprechen, was es gestattete, die geradlinigen Bewegungsbahnabschnitte 9, 10 des Massenmittelpunktes der Unwuchtmasse 3 um die Achse 4 auszuschließen und somit die Zeit der vollen Umdrehung der Unwuchtmasse 3 um die Achse 4 zu verkürzen und die Umlauffrequenz der Unwuchtmasse 3 gegenüber den bisher bekannten technischen Lösungen zu erhöhen. Die führt wiederum zur Vergrößerung der Zahl dar Bewegungen der Drehachse 4 der Unwuchtmasse 3 in den rechnerischen Bewegungsbahnabschnitten der Unwuchtmasse 3 um die Achse 4 und somit zur Erhöhung der Menge der dem Schwingungserzeuger 2 während jeder Periode des Hoch- und Niedersteigene des Schwimmittels 1 auf der Welle entnommenen Energie.

In den im vorstehenden beschriebenen Verfahren zur Umformung der Wellenenergie in eine Drehbewegung der Unwuchtmasse erfolgte die Betrachtung zwecks leichteren Verständnisses der physikalischen Prozesse am Beispiel nur einer Unwuchtmasse. Jedoch sei bemerkt, daß die Durchführung des Verfahrens zur Wellenenergieumformung mit Hilfe eines auf einem Schwimmittel 1 angeordneten Schwingungserzeugers 2, die eine Unwuchtmasse (insbesondere eine große Unwuchtmasse) besitzt, zur Störung des Schwimmittelgleichgewichts führen kann, weshalb man eine gerade Zahl von Unwuchtmassen benutzt, die sich auf einer vorgegebenen Bahn bewegen und in Gegenphase miteinander umlaufen, wobei jedes nächstfolgenden es Paar von Unwuchtmassen die Stabilität des Schwimmittels erhöht. Daher soll bei weiterer Beschreibung der Konstruktionen voll Wellenenergieanlagen eine gerade Zahl von Unwuchtmassen zugrundegelegt werden.

Bei der Anwendung von drei Unwuchtmassen im Schwingungserzeuger wählt man die Masse der zwei Unwuchtmassen derselben gleich der Masse der dritten Unwucht, wobei der freie Fall und das Hochsteigen der Unwucht mit größerer Masse bis auf die vorgegebene Höhe nahezu synchron mit den zwei übrigen Unwuchtmassen erfolgt, während die Drehung der größeren Unwuchtmasse um die Drehachse in Gegenphase mit den zwei übrigen Unwuchtmasse stattfindet.

Im nachstehenden sollen konkrete Ausführungsformen von diese Verfahren realisierenden Wellenenergieanlagen beschrieben werden.

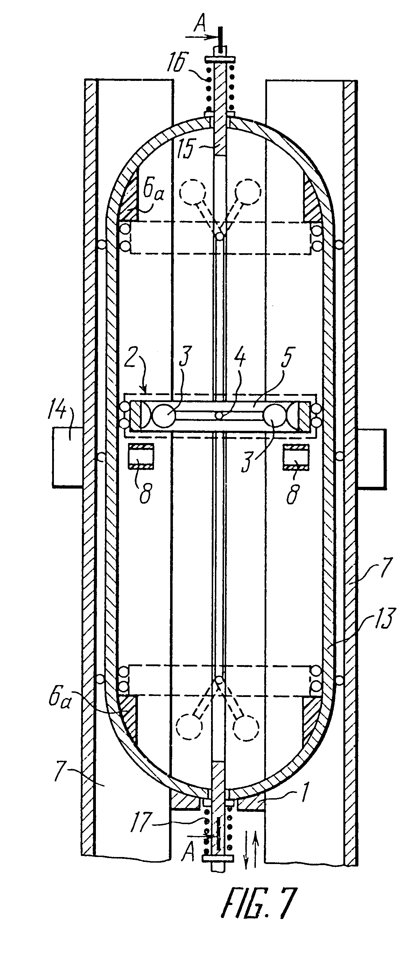

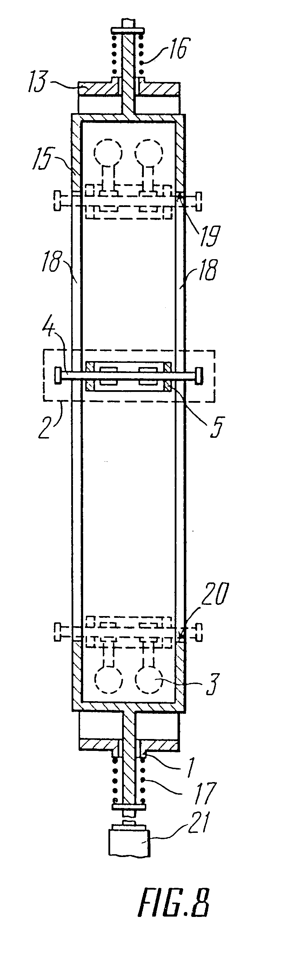

Die erfindungsgemäße Wellenenergieanlage enthält ein Schwimmittel 1 (Fig. 7), das sich im Schwimmzustand befindet und unter der Welleneinwirkung schaukelt. Auf dem Schwimmittel 1 ist in einer zu demselben senkrechten Ebene ein Rahmen 13 befestigt, an dem in einer zum Schwimmittel 1 senkrechten Ebene ein Schwingungserzeuger 2 hin- und herverschiebbar montiert ist. Der Schwingungserzeuger 2 ist in Form einer beweglichen Stütze 5, die sich an den vertikalen Wänden des Rahmens 13 entlang bewegt, sowie zweier Unwuchtmassen 3 ausgeführt, die auf einer Drehachse 4 drehbar angeordnet sind. Am Rahmen 13 befinden sich in dessen oberem und unterem Teil in bezug auf diesen Rahmen 13 feststehende Anschläge 6a, die die Bewegung der beweglichen Stütze 5 des Schwingungserzeugers 2 begrenzen. Darüber hinaus ist die Anlage mit zwei vertikalen Führungen 7 ausgestattet, die in einer zum Schwimmittel 1 senkrechten Ebene aufgestellt sind und das Schwimmittel 1 mit dem darauf angeordneten Rahmen 13 umfassen. Der Rahmen 13 verschiebt sich an den Führungen 7 in der zum Schwimmittel 1 senkrechten Ebene. Die vertikalen Führungen 7 werden bei deren Montage an fahrenden Schiffen mit Hilfe von Vorrichtungen befestigt, die eine minimale Aufnahme von Wellenschwingungen gewahrleisten, während sie bei den ortsfesten Wellenenergieanlagen unmittelbar im Boden verankert werden. Die Führungen 7 sind mit einem Mittel 8 zur Begrenzung der Verschiebung der beweglichen Stütze 5 des Schwingungserzeugers 2 ausgestattet, welches Anschläge darstellt, die an den Führungen 7 in einer zur Ebene des Rahmens 13 senkrechten Ebene verschiebbar angeordnet sind, wobei die Anschläge der Mittel 8 in einem Abstand angebracht sind, der so gut wie der halben Höhe des Rahmens 13 gleich ist. Die Verschiebung der Anschläge der Mittel 8 geschieht mit Hilfe einer Vorrichtung 14. Die Wellenenergieanlage enthält ferner einen Lenker 15, der gleichachsig mit dem Rahmen 13 angeordnet ist. Der Lenker 15 ist auf den beiden Seiten in bezug auf den Rahmen 13 durch Federn 16, 17 abgefedert und besitzt Nuten 18 (Fig. 8) zur Verschiebung der Drehachse 4 der Unwuchtmassen 3 gemeinsam mit der beweglichen Stütze 5 in diesen Nuten 18 relativ zum Rahmen 13. Die Nuten 18 des Lenkers 15 weisen im oberen und unteren Teil Stützflächen 19, 20 auf, die mit der Drehachse 4 der Unwuchtmassen 3 in der oberen und unteren Endlage der beweglichen Stütze 5 periodisch kontaktieren. Während der Periode des Hochsteigens des Schwimmittels 1 auf der Welle kontaktiert dabei die Stützfläche 20 mit dar Drehachse 4, während in der Periode des Herabsinkens des Schwimmittels 1 auf der Welle die Stützfläche 19 mit dieser Drehachse 4 kontaktiert. Die Länge der Nut 18 des Lenkers 15 wird so gewählt, daß die Drehachse 4 der Unwuchtmassen 3 bei der Verschiebung der beweglichen Stütze 5 mit den Stützflächen 19, 20 in den jeweiligen Perioden des Hoch- und Niedersteigens des Schwimmittels 1 auf der Welle früher kontaktiert als die bewegliche Stütze 5 mit den feststehenden Anschlägen 6a in Kontakt tritt (in Fig. 8 sind die Stützflächen 19, 20 in ihren Endstellungen abgebildet).

Mit Hilfe des relativ zum Rahmen 13 durch die Federn 16, 17 abgefederten Lenkers 15 wird die hin- und hergehende Bewegung auf einen linearen elektrischen Generator 21 übertragen, der sich auf dem Schwimmittel 1 befindet, und die Energieentnahme von den Unwuchtmassen 3 vorgenommen, wobei der Verschiebungsbetrag des Mitnehmers 15 entsprechend den technischen Daten des Generators 21 gewählt wird.

Die Arbeit der Wellenenergieanlage geht auf die folgende Weise vor sich.

Der Schwingungserzeuger 2 (Fig. 7) mit den Unwuchtmassen 3 in der horizontalen Lage wird über den Anschlägen des Mittels 8 zur Begrenzung der Verschiebung der beweglichen Stütze 5 angeordnet. Im Augenblick des Hochsteigens des Schwimmittels 1 auf der Welle werden die Anschläge des Mittels 8 weggenommen, und der Schwingungserzeuger 2 beginnt seinen freien Fall den Rahmen 13 herab. Bei der Berührung der beweglichen Stütze 5 mit dem unteren Anschlag 6a drehen sich die Unwuchtmassen 3, indem sie ihre Bewegung weiter fortsetzen, um die Achse 4 um den Winkel von 0 bis 180°. Während dieses Zeitintervalls für die Drehung der Unwuchtmassen 3 verschiebt das Schwimmittel 1, indem es auf der Welle hochsteigt, mittels des Anschlags 6a die bewegliche Stütze 5 mit der Drehachse 4 der Unwuchtmassen 3 mit einer Geschwindigkeit W aufwärts, wobei die Unwuchtmassen 3 eine Energiezunahme erhalten und die lineare Geschwindigkeit des Massenmittelpunktes der Unwuchtmassen 3 zunimmt.

Danach beginnen die Unwuchtmassen 3 gemeinsam mit der beweglichen Stütze 5 aufgrund von Tragheitskräften hochzusteigen, wobei sie ihre horizontale Lage beibehalten. In diesem Augenblick werden die Anschläge des Begrenzungsmittels 8 aus den Führungen 7 ausgefahren. Nachdem die bewegliche Stütze 5 die Anschläge des Begrenzungsmittels 8 erreicht hat, drehen sich die Unwuchtmassen 3 auf Kosten der restlichen kinetischen Energie um die Achse 4 um den Winkel von 180 bis 360° und beginnen dann bei ihrer horizontalen Lage erneut eine Abwärtsbewegung. Da die Führungen 7 keine Wellenschwingungen aufnehmen, so wird die lineare Geschwindigkeit des Massenmittelpunktes der Unwuchtmasse 3 während dieses Zeitintervalls nicht verändert. Nachdem die bewegliche Stütze 5 den unteren Anschlag 6a erreicht hat, drehen sich die Unwuchtmassen 3 erneut um die Achse 4 um den Winkel von 0 bis 180°, wobei die Drehachse 4 der Unwuchtmassen 3 unter Einwirkung des auf der Welle hochsteigenden Schwimmittels 1 wieder in Bewegung kommt und die lineare Geschwindigkeit des Massenmittelpunktes der Unwuchtmassen 3 erneut zunimmt.

Die Zyklenzahl und die Menge der aufgespeicherten Energie in den Unwuchtmassen 3 je eine Periode des Hochsteigens des Schwimmittels 1 sind durch die lineare Geschwindigkeit des Massenmittelpunktes der Unwuchtmasse 3 bei dessen Bahnbewegung sowie durch die Geschwindigkeit W des Hochsteigens des Schwimmittels 1 auf der Welle bestimmt.

Im Augenblick des Wechsels der Perioden des Hoch- und Niedersteigens des Schwimmittels 1 auf der Welle werden die Anschläge des Begrenzungsmittels 8 dank dem an der Vorrichtung 14 ankommenden Steuersignal des (nicht gezeichneten) Trägheitskraftgebers weggenommen, wodurch die bewegliche Stütze 5 mit den Unwuchtmassen 3 bei deren horizontaler Lage nach oben geht. Nachdem die bewegliche Stütze 5 die oberen Anschläge 6a am Rahmen 13 erreicht hat, drehen sich die Unwuchtmassen 3 aufgrund der kinetischen Energie um die Achse 4 um den Winkel von 180 bis 360°, wobei sich die Drehachse 4 der Unwuchtmassen 3 unter der Einwirkung des Schwimmittels 1 in der Periode des Niedersteigens des letzteren auf der Welle abwärts bewegt, die Unwuchtmassen 3 eine Energiezunahme erhalten und die lineare Geschwindigkeit des Massenmittelpunktes der Unwuchtmassen 3 zunimmt. Danach beginnen die Unwuchtmassen 3 bei ihrer horizontalen Lage die Abwärtsbewegung. In diesem Augenblick werden die Anschläge des Begrenzungsmittels 8 ausgefahren.

Bei der Berührung der beweglichen Stütze 5 mit den Anschlägen des Begrenzungsmittels 8 drehen sich die Unwuchtmassen 3, indem sie ihre Bewegung fortsetzen, um die Achse 4 um den Winkel von 0 bis 180°.

Da die Führungen 7 keine Wellenschwingungen aufnehmen, so wird die lineare Geschwindigkeit des Massenmittelpunktes der Unwuchtmasse 3 in diesem Zeitintervall nicht verändert.

Dann beginnen die Unwuchtmassen 3 gemeinsam mit der beweglichen Stütze 5 aufgrund von Trägheitskräften erneut hochzusteigen, wobei sie ihre horizontale Lage beibehalten. Nachdem die bewegliche Stütze 5 die oberen Anschläge 6a des Rahmens 13 erreicht haben, drehen sich die Unwuchtmassen 3 aufgrund der kinetischen Energie erneut um die Achse 4 um den Winkel von 180 bis 360°, wobei die Drehachse 4 gemeinsam mit den Unwuchtmassen 3 sich unter Einwirkung des Schwimmittels 1 erneut abwärts bewegt und die Unwuchtmassen 3 erneut eine Energiezunahme erhalten.

Danach beginnen aie Unwuchtmassen 3 bei ihrer horizontalen Lage erneut eine Abwärtsbewegung. In dieser Weise werden die Unwuchtmassen 3 während der Periode des Niedersteigens des Schwimmittels 1 auf der Welle mehrfach beschleunigt und speichern also ähnlich der Periode des Hochsteigens des Schwimmittels 1 auf der Welle Energie auf.

Der Prozeß der Energieaufspeicherung in den Unwuchtmassen 3 wird so lange fortgesetzt, bis die lineare Geschwindigkeit des Massenmittelpunktes der Unwuchtmassen 3 einen Betrag erreicht haben wird, bei dem die Energieentnahme von den Unwuchtmassen 3 beginnen kann. Die Übertragung der hin- und hergehenden Bewegung auf den Generator 21 mittels des Lenkers 15 geschieht auf die folgende Weise. Während der Periode des Hochsteigens des Schwimmittels 1 auf der Welle kontaktiert beim Herabfallen der beweglichen Stütze 5 die Drehachse 4, indem sie sich in den Nuten 18 bewegt, mit der Stützfläche 20 und verschiebt dabei den Lenker 15 relativ zum Rahmen 13 nach unten. Diese gemeinsame Bewegung des Lenkers 15 und der Drehachse 4 dauert bis zur Berührung der beweglichen Stütze 5 mit dem feststehenden Anschlag 6a (Fig. 7) am Rahmen 13 an, wobei die Feder 16 zusammengedrückt wird, während die Feder 17 sich ausdehnt (die Bewegungsgröße des Lenkers 15 wird durch die technischen Daten des Generators 21 (Fig. 8) bestimmt). Nach der erfolgten Drehung der Unwuchtmassen 3 um den Winkel von 0 bis 180° steigt die bewegliche Stütze 5 mit der Drehachse 4 und den Unwuchtmassen 3 hoch, wobei die Federn 16, 17 in ihre Ausgangsstellung zurückkehren, die Stützflache 20 des Lenkers 15 an die Drehachse 4 andrücken und den Lenker 15 gemeinsam mit der Drehachse 4 bis zur Anfangsstellung des Lenkers 15 nach oben verschieben. Die Federn 16, 17 gewährleisten die vorgegebene Stellung des Lenkers 15 in bezug auf den Rahmen 13 beim Fehlen eines Kontaktes des Lenkers 15 über die Stützfläche 20 mit der Drehachse 4. Bei nachfolgendem Niederfallen der beweglichen Stütze 5 wiederholt sich der Bewegungszyklus des Lenkers 15 relativ zum Rahmen 13.

In der Periode des Niedersteigens des Schwimmittels 1 auf der Welle werden die Anschläge des Begrenzungsmittels 8 weggenommen, und die bewegliche Stütze 5 steigt hoch, wobei sich die in den Nuten 18 verschiebende Drehachse 4 mit der Stützfläche 19 kontaktiert und den Lenker 15 relativ zum Rahmen 13 bis zur Berührung der beweglichen Stütze 5 mit dem oberen feststehenden Anschlag 6a aufwärts bewegt, wobei die Feder 17 zusammengedrückt wird, die Feder 16 aber sich ausdehnt.

Nach der Drehung der Unwuchtmassen 3 um den Winkel von 180 bis 360° fällt die bewegliche Stütze 5 nieder, und die Federn 16, 17 drücken, indem sie in ihre Ausgangsstellung zurückkehren, die Stützfläche 19 an die Drehachse 4 an, wobei sich der Lenker 15 gemeinsam mit der Drehachse 4 bis zur Anfangsstellung des Lenkers 15 bewegt.

Während einer jeden Periode des Hoch- und Niedersteigens des Schwimmittels 1 auf der Welle erfolgt die Übertragung der hin- und hergehenden Bewegung des Lenkers 15 auf den Generator 21 und findet auch die Energieentnähme von den umlaufenden Unwuchtmassen 3 mit der Umwandlung der entnommenen Energie in elektrischen Strom statt.

Also gestattet es die erfindungsgemäße Wellenenergieanlage zur Durchführung des Verfahrens zur Wellenenergieumformung:

- die Führungen 7 (Fig. 7) und den Anschlag des Mittels 8 zur Erzielung, einer mehrmaligen Verschiebung der Drehachse 4 der Unwuchtmassen 3 unter Einwirkung des Schwimmittels 1 in der Einwirkungsrichtung des letzteren während einer jeden von den Perioden des Hoch- und Niedersteigens des Schwimmittels 1 auf der Welle zur Umkehr der Bewegungsrichtung der Drehachse 4 der Unwuchtmassen 3 beim Wechsel der Perioden des Hoch- und Niedersteigens des Schwimmittels 1 auf der Welle unter Erhaltung der in der Unwuchtmasse 3 während der vorhergehenden Periode aufgespeicherten Energie zur Gewährleistung der Verschiebung der Drehachse 4 der Unwuchtmassen 3 innerhalb von vorgegebenen zu benützen, was zur Aufspeicherung einer größeren Energiemenge in den Unwuchtmassen 3 führt;
- den Trägheitskraftgeber und die Vorrichtung 14 zur Erzielung einer dynamischen Resonanz des Schwingungserzeugers 2 mit den Schwingungen des Schwimmittels 1 zu benützen, wodurch eine maximale Energieentnahme von der Wellenenergieanlage gewährleistet wird.

Möglich ist eine weitere Ausführungsform der Wellenenergieanlage zur Durchführung des Verfahrens zur Wellenenergieumformung.

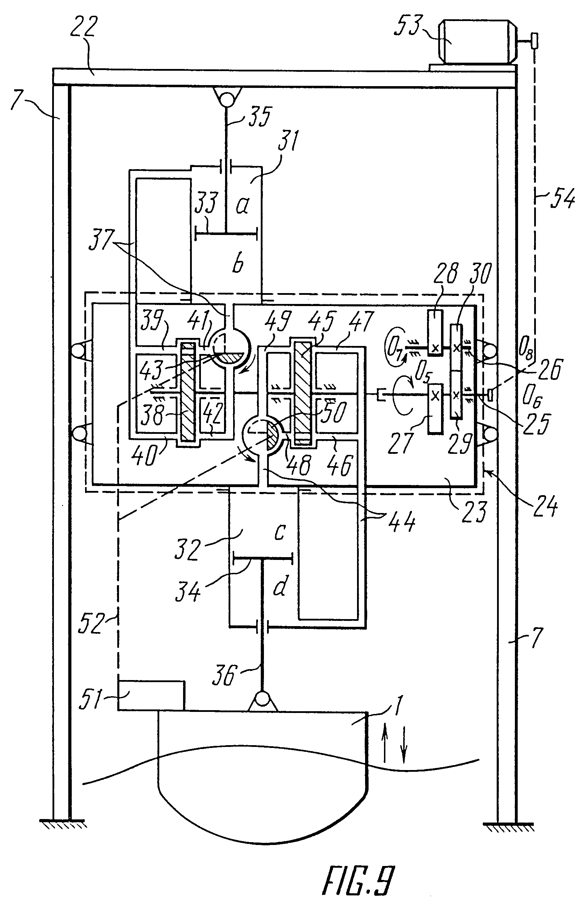

Die erfindungsgemäße Wellenenergieanlage enthält ein Schwimmittel 1 (Fig. 9), das sich im Schwimmzustand befindet und unter Welleneinwirkung schaukelt, sowie zumindest zwei vertikale Führungen 7, die in einer zum Schwimmittel 1 senkrechten Ebene angeordnet sind, das Schwimmittel 1 umfassen und im oberen Teil durch eine Querbalken 22 miteinander verbunden sind. Die vertikalen Führungen 7 werden bei deren Montage an Schiffen mit Hilfe von Vorrichtungen befestigt, die eine minimale Aufnahme von Wellenschwingungen gewährleisten, bei ortsfesten Wellenenergieanlagen werden sie aber unmittelbar im Boden befestigt. Zwischen den Führungen 7 ist hin- und herverschiebbar zwischen denselben eine bewegliche Stütze 23 eines Schwingungserzeugers 24 (in Fig. durch eine gestrichelte geschlossene Linie angedeutet) angeordnet. Auf der beweglichen Stütze 23 sind Wellen 25 und 26 mit darauf befestigten Unwuchtmassen 27 und 28 sowie im Eingriff stehenden Zahnrädern 29, 30 angebracht. Die Unwuchtmassen 27, 28 sind solcherweise angeordnet, daß sie eine volle Umdrehung um ihre Drehachsen $O_5$, $O_6$ und $O_7$, $O_8$ gemeinsam mit den Zahnrädern 29, 30 nur in Gegenphase ausführen können. Die Wellenenergieanlage enthält ein am Schwingungserzeuger 24 angebrachtes Mittel zur Begrenzung der Bewegungen der beweglichen Stütze 23 des Schwingungserzeugers 24 längs der Führungen 7, das in Form von zwei Hydraulikzylindern 31, 32 mit Kolben 33, 34 und jeweiligen Kolbenstangen 35, 36 ausgeführt ist. Die Hydraulikzylinder 31, 32 sind mit der beweglichen Stütze 23 verbunden. Der Kolben 33 des Hydraulikzylinders 31 ist über die Kolbenstange 35 mit dem Querbalken 22 der Führungen 7 kinematisch verbunden, während der Kolben 34 des Hydraulikzylinders 32 über die Kolbenstange 36 mit dem Schwimmittel 1 kinematisch verbunden ist.

Die vom Kolben 33 getrennten Zylinderräume "a" und "b" des Hydraulikzylinders 31 sind durch eine Hydraulikleitung 37 miteinander verbunden, in die ein Längsschieberventil 38 eingebaut ist. Das Längsschieberventil 38 befindet sich auf der beweglichen Stütze 23. Die Hydraulikleitung 37 wird am Eintritt in das Längsschieberventil 38 in zwei parallele Hydraulikleitungen 39, 40 unterteilt, während sie am Austritt nach dem Längsschieberventil 38 mittels Hydraulikleitungen 41, 42 mit einem drehbaren Ventilschalter 43 verbunden ist. Gemäß der Drehwinkel der Welle 25 ist der Eintritt der Hydraulikleitung 39 relativ zum Eintritt der Druckleitung 40 in das Längsschieberventil 38 um 180° versetzt. Der Ventilschalter 43 ist zur Richtungsänderung der Flüssigkeitsbewegung in der Leitung 41 bzw. in der Leitung 42 bestimmt und besitzt zwei Drehstellungen (in Fig. ist die Zweite Stellung durch gestrichelte Linien angedeutet).

Die vom Kolben 32 getrennten Zylinderräume "c" und "d" des Hydraulikzylinder 34 sind durch eine Hydraulikleitung 44 miteinander verbunden, in die ein Längsschieberventil 45 eingebracht ist. Das Längsschieberventil 45 befindet sich auf der beweglichen Stütze 23. Die Hydraulikleitung 44 wird am Eintritt in das Längsschieberventil 45 in zwei parallele Hydraulikleitungen 46, 47 unterteilt, während sie nach dem Austritt aus dem Längsschieberventil 45 mittels Hydraulikleitungen 48, 49 mit einem drehbaren Ventilschalter 50 verbunden ist. Gemäß dem Drehwinkel ist der Eintritt der Hydraulikleitung 46 in bezug auf den Eintritt der Hydraulikleitung 47 in das Längsschieberventil 45 um 180° verschoben. Der Ventilschalter 50 ist zur Richtungsänderung der Flüssigkeitsbewegung in der Leitung 49 bzw. der Leitung 48 bestimmt und besitzt zwei Drehstellungen (in Fig. ist die zweite Stellung durch gestrichelte Linien angedeutet).

Die Längsschieberventile 38 und 45 sind mit der Welle 25 kinematisch verbunden, während die drehbaren Ventilschalter 43, 50 mit einer die Schwingungen des Schwimmittels 1 verfolgenden Einrichtung 51 über eine Steuerkopplung 52 (in Fig. durch gestrichelte Linien angedeutet) verbunden sind. Zur Durchführung der Energieentnahme von den auf den Wellen 25 und 26 sitzenden umlaufenden Unwuchtmassen 27, 28 ist die Wellenenergieanlage mit einem elektrischen Generator 53 versehen, der auf dem

17

Querbalken der vertikalen Führungen 7 installiert und über eine kinematische Bindung 54 (in Fig. durch gestrichelte Linien angedeutet) mit der Welle 25 verbunden ist.

Die Arbeit der Wellenenergieanlage geht auf die folgende Weise vor sich. Die Anlage wird vorher mit einem Arbeitsmedium - einer Arbeitsflüssigkeit - gefüllt und derart angeordnet, daß bei geringem Wellengang an der Wasseroberfläche die bewegliche Stütze 23 des Schwingungserzeugers 24 so gut wie im gleichen Abstand von dem Schwimmittel 1 und dem Querbalken 22 der Führungen 7 liegen würde.

Das Schwimmittel 1 kommt unter der Welleneinwirkung in schaukelnde Bewegung. Dann werden die Wellen 25, 26 mit den im Eingriff stehenden Zahnrändern 29, 30 mit den Unwuchtmassen 27, 28 und den Längsschieberventilen 38 und 45 bis zu einer Umlauffrequenz von mehr als eine Umdrehung je 360° während einer Periode des Hoch- bzw- Niedersteigens des Schwimmittels 1 auf der Welle beschleunigt (die Einrichtung zur Beschleunigung der Wellen 25, 26 ist in Fig. 9 nicht abgebildet). Dabei entspricht die Stellung der drehbaren Ventilschalter 43, 50 während der Periode des Hochstegens des Schwimmittels 1 der in Fig. 9 gezeigten Stellung. Bei einer Drehung der Unwuchtmassen 27, 28 innerhalb des vorgenannten Zeitintervalls um den Winkel von 0 bis 180° um die Drehachsen $O_5$, $O_6$ und $O_7$, $O_8$, was dem unteren Halbkreis der Bewegungsbahn des Massenmittelpunktes der Unwuchtmassen 27, 28 entspricht, werden mit Hilfe der Welle 25 die Längsschieberventile 38, 45 um den Winkel von 0 bis 180° gedreht. Dabei öffnet das Längsschieberventil 38 entsprechend der in Fig. 9 angedeuteten Stellung des drehbaren Ventilschalters 43 während des vorerwähnten Zeitintervalls die Druckleitung 37 zum freien Überströmen des Arbeitsmediums (der Arbeitsflüssigkeit) über die Hydraulikleitungen 41, 39 aus dem unteren Zylinderraum "b" des Hydraulikzylinders 31 in den oberen Zylinderraum "a" desselben, während das Längsschieberventil 45 entsprechend der in Fig. 9 angedeuteten Stellung des Ventilschalters 50 während desselben Zeitintervalls die Hydraulikleitung 44 zum Strömen der Flüssigkeit über die Hydraulikleitungen 47, 49 und 46, 48 absperrt. Das Arbeitsmedium (die Arbeitsflüssigkeit) kann aus dem einen Zylinderraum "c" des Hydraulikzylinders 32 in den anderen Zylinderraum "d" desselben nicht überströmen. Zwischen dem Schwimmittel 1 und der beweglichen Stütze 23 des Schwingungserzeugers 24 mit den auf derselben angeordneten, in Gegenphase umlaufenden Umwuchtmassen 27, 28 wird eine starre mechanische Verbindung hergestellt (dabei wird die physikalische Eigenschaft der Inkompressibilität der Druckflüssigkeit als Arbeitsmedium ausgenutzt). Das Schwimmittel 1 wirkt, indem es auf der Welle hochsteigt, über die Kolbenstange 36, den Kolben 34 des Hydraulikzylinders 32 mit der beweglichen Stütze 23 zusammen und verschiebt die bewegliche Stütze 23 gemeinsam mit den Drehachsen $O_5$, $O_6$ und $O_7$, $O_8$ der Wellen 25, 26 und der Unwuchtmassen 27, 28 an den Führungen 7 nach oben während des Zeitintervalls für die Umdrehung der Unwuchtmassen 27, 28, wobei die Unwuchtmassen 27, 28 eine Energiezunahme erhalten und die Massenmittelpunkte der Unwuchtmassen 27, 28 ihre lineare Geschwindigkeit um den Faktor 2 - den Wert der verdoppelten Steiggeschwindigkeit des Schwimmittels 1 - vergrößern.

Innerhalb desselben Zeitintervalls wird gleichzeitig mit der Herstellung einer starren mechanischen Verbindung zwischen dem Schwimmittel 1 und der beweglichen Stütze 23 die starre mechanische Verbindung zwischen der beweglichen Stütze 23 und den Führungen 7 beseitigt, da die Hydraulikleitung 37 für die Überströmung der Flüssigkeit über die Hydraulikleitungen 41, 39 aus dem unteren Zylinderraum "b" des Hydraulikzylinders 31 in dessen oberen Zylinderraum "a" geöffnet ist. Dabei behindert die Zusammenwirkung der Kolbenstange 35, des Kolbens 33 mit dem Querbalken 22 der Führungen 7 nicht die Bewegung der beweglichen Stütze 23 gemeinsam mit dem Schwimmittel 1 in der Aufwärtsrichtung längs der Führungen 7.

Während der Periode des Hochsteigens des Schwimmittels 1 auf der Welle innerhalb des Zeitintervalls für die Drehung der Unwuchtmassen 27, 28 um den Winkel von 180 bis 360° um die Drehachsen $O_5$, $O_6$ und $O_7$, $O_8$, was dem oberen Halbkreis der Bewegungsbahn der Massenmittelpunkte der Unwuchtmassen 27, 28 entspricht, werden die Längsschieberventile 38, 45 mittels der Welle 25 um den Winkel von 180 bis 360° gedreht. Dabei sperrt das Längsschieberventil 38 gemäß der in Fig. 9 gezeigten Stellung des drehbaren Ventilschalters 43 während des vorerwähnten Zeitintervalls die Hydraulikleitung 37 für die Überströmung der Flüssigkeit über die Hydraulikleitungen 41, 39, 40,42 aus dem unteren Zylinderraum "b" des Hydraulikzylinders 31 in dessen oberen Zylinderraum "a" ab, während das Längsschieberventil 45 gemäß der in Fig. 9 gezeigten Stellung des Ventilschalters 50 während desselben Zeitintervalls die Hydraulikleitung 44 für die freie Überströmung der Flüssigkeit über die Hydraulikleitungen 49, 47 aus dem oberen Zylinderraum "c" des Hydraulikzylinders 32 in dessen unteren Zylinderraum "d" öffnet. Zwischen der beweglichen Stütze 23 des Schwingungserzeugers 24 mit den auf derselben angeordneten, in Gegenphase umlaufenden Unwuchtmassen 27, 28 und dem Querbalken 22 der Führungen 7 wird eine starre mechanische Verbindung hergestellt, während zwischen dem Schwimmittel 1 und der beweglichen Stütze 23 keine starre mechanische Verbindung besteht. Da die Führungen 7 im Wassermedium mit minimaler Aufnahme von Wellenschwingungen angeordnet sind, bleiben die Drehachsen $O_5$, $O_6$ und $O_7$, $O_8$

der Unwuchtmassen 27, 28 während der Drehung der Unwuchtmassen 27, 28 innerhalb desselben Zeitintervalls in bezug auf die Führungen 7 unbeweglich, die Unwuchtmassen 27, 28 wirken mit dem Schwimmittel 1 nicht zusammen und büßen ihre Energie nicht ein.

Das Schwimmittel 1 bewegt sich während des Zeitintervalls für die Drehung der Unwuchtmassen 27, 28 um den Winkel von 180 bis 360° ungehindert in der Aufwärtsrichtung relativ zu den Führungen 7, da der Kolben 34 des Hydraulikzylinders 32 bei seiner Zusammenwirkung mit der Kolbenstange 36 keine Wirkung auf die bewegliche Stütze 23 ausübt. Die Flüssigkeit strömt bei der Bewegung des Kolbens 34 gemeinsam mit dem Schwimmittel 1 aus dem oberen Zylinderraum "c" des Hydraulikzylinders 32 in den unteren Zylinderraum "d" über die Hydraulikleitungen 37, 49, 47 frei über.

Dieser Zyklus der Beschleunigung der Drehbewegung der Unwuchtmassen 27, 28 bei deren weiterer Drehung kommt während der gesamten Periode des Hochsteigens des Schwimmittels 1 auf der Welle zustande, wobei unabhängig von der Umlauffrequenz der Unwuchtmassen 27, 28 diese Unwuchtmassen 27, 28 über die Welle 25 der Längsschieberventile 38, 45 den Prozeß der vielfachen Zunahme ihrer Geschwindigkeit und die Speicherung, der Rotationsenergie steuern.

Beim Wechsel der Perioden des Hoch- und Niedersteigens des Schwimmittels 1 auf der Welle, wenn die Rückübertragung der Energie von den Unwuchtmassen 27, 28 zum Schwimmittel 1 möglich ist, bringt die die Schwingungen des Schwimmittels 1 verfolgende Einrichtung 51 mittels der Steuerkopplung 52 (in Fig. 9 durch gestrichelte Linien angedeutet) eine Drehung der Ventilschalter 43, 50 in der in Fig. 9 mit Pfeilen angedeuteten Richtung bis zu einer Stellung zustande, die in Fig. 9 durch gestrichelte Linien angedeutet ist.

Während des Niedersteigens des Schwimmittels 1 auf der Welle werden innerhalb des Zeitintervalls für die Drehung der Unwuchtmassen 27, 28 um den Winkel von 0 bis 180° um die Drehachsen $O_5$, $O_6$ und $O_7$, $O_8$, was dem unteren Halbkreis der Bewegungsbahn der Massenmittelpunkte der Unwuchtmassen 27, 28 entspricht, die Längsschieberventile 38, 45 mit Hilfe der Weile 25 um den Winkel von 0 bis 180° gedreht.

Dabei sperrt das Längsschieberventil 38 entsprechend der in Fig.9 angegeben Stellung des drehbaren Ventilschalters 43 (in Fig. 9 durch gestrichelte Linien angedeutet) die Hydraulikleitung 37 für das Strömen der Flüssigkeit über die Hydraulikleitungen 39, 41 und 40, 42 ab, während das Längsschieberventil 45 entsprechend der in Fig. 9 angegebenen Stellung des drehbaren Ventilschalters 50 (in Fig.9 durch gestrichelte Linien angedeutet) die Hydraulikleitung 44 für die freie Überströmung der Flüssigkeit über die Hydraulikleitungen 46, 48 aus dem unteren Zylinderraum "d" des Hydraulikzylinders 32 in dessen oberen Zylinderraum "c" öffnet. Zwischen der beweglichen Stütze 23 des Schwingungserzeugers 24 mit den auf derselben angeordneten, in Gegenphase umlaufenden Unwuchtmassen 27, 28 und dem Querbalken 22 der Führungen 7 wird eine starre mechanische Verbindung hergestellt, während zwischen dem Schwimmittel 1 und der beweglichen Stütze 23 keine starr mechanische Verbindung besteht. Da die Führungen 7 im Wassermedium mit minimaler Aufnahme von Wellenschwingungen angeordnet sind, so bleiben die Unwuchtmassen 27, 28 während des Zeitentervalls für die Drehung der Unwuchtmassen 27, 28 um den Winkel von 0 bis 180° um die Drehachsen $O_5$, $O_6$ und $O_7$, $O_8$ in bezug auf die Führungen 7 unbeweglich, wirken also mit dem Schwimmittel 1 nicht zusammen und büßen demnach keine Energie ein.

Das Schwimmittel 1 bewegt sich ungehindert innerhalb des erwähnten Zeitintervalls für die Drehung der Unwuchtmassen 27, 28 um den Winkel von 0 bis 180° in der Abwärtsrichtung relativ zu den Führungen 7, weil die Flüssigkeit bei der Bewegung der Kolbenstange 36 des Kolbens 34 gemeinsam mit dem Schwimmittel 1 aus dem unteren Zylinderraum "d" des Hydraulikzylinders 32 in dessen oberen Zylinderraum "c" über die Hydraulikleitungen 44, 46, 48 frei überströmt.

Während der Periode des Niedersteigens des Schwimmittels 1 auf der Welle werden innerhalb des Zeitintervalls für die Drehung der Unwuchtmassen 27, 28 um den Winkel von 180 bis 360° um die Drehachsen $O_5$, $O_6$ und $O_7$, $O_8$, was dem oberen Halbkreis der Bewegungsbahn des Massenmittelpunktes der Unwuchtmassen 27, 28 entspricht, die Längsschieberventile 38, 45 mit Hilfe der Welle 25 um den Winkel von 180 bis 360° gedreht. Dabei öffnet das Längsschieberventil 38 entsprechend der in Fig. 9 angegebenen Stellung des drehbaren Ventilschalters 43 (in Fig. 9 durch gestrichelte Linien angedeutet) während des erwähnten Zeitintervalls die Hydraulikleitung 37 für das freie Überströmen der Flüssigkeit über die Hydraulikleitungen 37, 40, 42 aus dem oberen Zylinderraum "a" des Hydraulikzylinders 31 in dessen unteren Zylinderraum "b", während das Längsschieberventil 45 gemäß der in Fig. 9 angedeuteten Stellung des Ventilschalters 50 (in Fig. 9 durch gestrichelte Linien angedeutet) während desselben Zeitintervalls die Hydraulikleitung 44 für das Strömen der Flüssigkeit über die Hydraulikleitungen 46, 48 aus dem unteren Zylinderraum "d" des Hydraulikzylinders 32 in dessen oberen Zylinderraum "c" absperrt. Zwischen der beweglichen Stütze 23 des Schwingungserzeugers 24 mit den auf derselben angeordneten, in Gegenphase rotierenden Unwuchtmassen 27, 28 und dem Schwimmittel 1 wird eine starre mechanische Verbindung hergestellt, während zwischen dem Querbalken 22, den Führungen 7 und der beweglichen Stütze 23 keine starre mechanische Verbindung besteht. Das Schwimmittel 1 wirkt, indem es auf der Welle niedersteigt, über die Kolbenstange 36, den Kolben 34 des Hydraulikzylinders 32 mit der beweglichen Stütze 23 zusammen und verschiebt dabei die bewegliche Stütze 23 gemeinsam mit den Drehachsen $O_5$, $O_6$ und $O_7$, $O_8$ der Wellen 25, 26 und der Unwuchtmassen 27, 28 während des Zeitintervalls für die Drehung der Unwuchtmassen 27, 28 um den Winkel von 180 bis 360° längs der Führungen 7 nach unten, wobei die Unwuchtmassen 27, 28 eine Energiezunahme erhalten und der Massenmittelpunkt der Unwuchtmassen 27, 28 seine lineare Geschwindigkeit um den Wert 2W - die verdoppelte Sinkgeschwindigkeit des Schwimmittels 1 - vergrößert. Dabei behindert die Zusammenwirkung der Kolbenstange 35, des Kolbens 33 mit dem Querbalken 22 der Führungen 7 nicht die Abwärtsbewegung der beweglichen Stütze 23 gemeinsam mit dem Schwimmittel 1 längs der Führungen 7, weil die Hydraulikleitung 37 für die Überströmung der Flüssigkeit über die Hydraulikleitungen 40, 42 aus dem oberen Zylinderraum "a" des Hydraulikzylinders 31 in dessen unteren Zylinderraum "b" geöffnet ist.

Dieser Zyklus der Drehbewegungsbeschleunigung der Unwuchtmassen 27, 28 bei deren weiterer Drehung findet während der gesamten Periode des Niedersteigs des Schwimmittels 1 auf der Welle statt. Bei jedem Wechsel der Perioden des Hoch- und Niedersteigens des Schwimmittels 1 auf der Welle bringt die die Schwingungen des Schwimmittels 1 verfolgende Einrichtung 51 mittels der Steuerkopplung 52 eine Drehung der Ventilschalter 43, 50 zustande, wodurch eine Richtungsänderung der Einwirkung auf die Drehachsen $O_5$, $O_6$ und $O_7$, $O_8$ der Unwuchtmassen 27, 28 sowie die Energieaufspeicherung in den Unwuchtmassen 27, 28 während einer jeden Periode des Hoch- und Niedersteigens des Schwimmittels 1 auf der Welle gewährleistet werden.

Die Energieentnahme von den Unwuchtmassen 27, 28 erfolgt bei Erreichen der rechnerischen Unlaufgeschwindigkeit der Unwuchtmassen 27, 28 mittels des elektrischen Generators 53 über die kinematische Verbindung des Generators 53 mit der Zapfwelle 25 während jeder beliebigen Periode des Hoch- und Niedersteigens des Schwimmittels 1 auf der Welle.

In dieser Weise gestattet es die erfindungsgemäße Wellenenergieanlage zur Durchführung des Verfahrens zur Wellenenergieumformung:

- die Führungen 7 zur Gewährleistung einer mehrmaligen Zusammenwirkung der umlaufenden Unwuchtmassen 27, 28 mit dem Schwimmittel 1 sowohl in der Periode des Hochsteigens als auch in der Periode des Niedersteigens des Schwimmittels 1 auf der Welle zu benützen, was zur bedeutenden zusätzlichen Energieaufspeicherung in den Unwuchtmassen 27, 28 führt;
- die Einrichtung 5 mit den drehbaren Ventilschaltern 43, 50 zur Erzielung einer dynamischen Resonanz des Schwingungserzeugers 24 mit den Schwingungen des Schwimmittels 1 auf der Welle zu verwenden, wodurch eine maximale Energieentnahme von der Wellenenergieanlage gewährleistet wird;
- die Mittel zur Begrenzung der Verschiebung der beweglichen Stütze 23 in Form von Hydraulikzylindern 31,32 mit den Kolben 33, 34 und Kolbenstangen 35, 36 zu verwenden, die sowohl mit dem Schwimmittel 1 als auch mit den Führungen 7 zur Erhöhung der Umdrehungszahl der Unwuchtmassen 27, 28 während eines jeden Zyklus des Hoch- und Niedersteigens des Schwimmittels 1 auf der Welle kinematisch verbunden sind, was zur zusätzlichen Energieaufspeicherung in den Unwuchtmassen 27, 28 führt;
- die Längsschieberventile 38, 45 zu verwenden, die mit der Welle 25 zur Steuerung des Prozesses der mehrfachen Energiezunahme in den Unwuchtmassen 27, 28 unabhängig von der Umlauffrequenz der Unwuchtmassen 27, 28 während einer jeden Periode des Hoch- und Niedersteigens des Schwimmittels 1 auf der Welle kinematisch verbunden sind, was eine hohe Geschwindigkeit der Energieaufspeicherung in den Unwuchtmassen 27, 28 gewährleistet.

Also gestattet es das erfindungsgemäße Verfahren zur Wellenenergieumformung und die erfindungsgemäßen Wellenenergieanlagen, die Energie der Meereswellen mit einem hohen Wirkungsgrad effektiv in die elektrische Energie umzuwandeln. Die erfindungsgemäße Wellenenergieanlage ist umweltfreundlich, sie führt zu keiner zusätzlichen Erwärmung der Atmosphäre und keiner Verunreinigung des Wasserbeckens der Erde.

Die Erfindung gestattet es, leistungsfähige Meer- und Ozeanwellenkraftwerke mit Abführung der Elektroenergie auf die Küste bzw. mit Verwertung derselben zur Versorgung von energieintensiven Meerbetrieben (beispielsweise zur Erzeugung von Wasserstoff, Metanol, hochreinen Metallen bzw. zur Gewinnung von Schmelzsalzen - Elektrolyten - von Lithiumhalogeniden) zu schaffen.

Die erfindungsgemäßen Wellenenergieanlagen hoher Leistung können als Energieanlagen für den Antrieb von Schiffsvortriebsorganen angewendet werden.

Gewertbliche Verwertbarkeit

Die Erfindung kann bei allen Arten des Wassertransports sowie in speziell projektierten Schwimmitteln beliebiger Wasserverdrängung und beliebiger Klassen zur Energiegewinnung aus den Meereswellen in einem weiten Frequenzbereich derselben Anwendung finden.

**Patentansprüche**

1. Verfahren zur Umformung von Wellenenergie mittels eines auf einem Schwimmittel (1) installierten Schwingungserzeugers (2, 24) mit mindestens einer um eine Drehachse (4, $O_5$, $O_6$, $O_7$, $O_8$) beweglichen Unwuchtmasse (3, 27, 28), wobei der Unwuchtmasse (3, 27, 28) eine Anfangsgeschwindigkeit ($v_o$) erteilt und ihre beschleunigte Bewegung auf einer vorgegebenen Bahn (9, 10, 9', 10') zur Aufspeicherung von Energie durch die Unwuchtmasse (3, 27, 28) bewirkt wird, wobei die Bewegung eine volle Umdrehung der Unwuchtmasse (3, 27, 28) und eine Verschiebung der Drehachse (4, $O_5$, $O_6$, $O_7$, $O_8$) in einer zum Schwimmittel (1) im wesentlichen senkrechten Ebene infolge Einwirkens des Schwimmittels (1) während der Periode der Aufwärtsbewegung des letzteren auf einer Welle umfaßt, wobei die Entnahme der in der Unwuchtmasse aufgespeicherten Energie während der Aufwärtsbewegung des Schimmittels (1) auf der Welle erfolgt, dadurch **gekennzeichnet,** daß während jeder Periode der Aufwärts-und Abwärtsbewegung des Schwimmittels (1) die Unwuchtmasse (3, 27, 28) mehr als einmal um ihre Drehachse (4, $O_5$, $O_6$, $O_7$, $O_8$) gedreht wird, während die Drehachse (4, $O_5$, $O_6$, $O_7$, $O_8$) der Unwuchtmasse (3, 27, 28) unter Einwirkung und in Einwirkrichtung des Schwimmittels (1) mehrmals verschoben wird, wobei während jeder vollen Umdrehung der Unwuchtmasse (3, 27, 28) innerhalb vorgegebener Zeitintervalle mindestens eine Verschiebung der Drehachse (4, $O_5$, $O_6$, $O_7$, $O_8$) erfolgt, während bei jedem Wechsel der Perioden der Aufwärts- und Abwärtsbewegung des Schwimmittels (1) auf der Welle die Verschiebungsrichtung der Drehachse (4, $O_5$, $O_6$, $O_7$, $O_8$) unter Aufrechterhaltung der in der Unwuchtmasse (3, 27, 28) aufgespeicherten Energie umgekehrt wird, wobei die Energieentnahme zusätzlich während der Abwärtsbewegung des Schwimmittels (1) vorgenommen wird.

2. Verfahren nach Anspruch 1, dadurch gekennzeichnet, daß bei jeder vollen Umdrehung der Unwuchtmasse (3, 27, 28) die einmalige Verschiebung der Drehachse (4, $O_5$, $O_6$, $O_7$, $O_8$) während der Aufwärtsbewegung des Schwimmittels (1) innerhalb eines Zeitintervalls erfolgt, das einer Drehung der Unwuchtmasse (3, 27, 28) während der Periode der Aufwärtsbewegung des Schwimmittels (1) vorwiegend um den Winkelbereich von 0° bis 180° und während der Periode der Abwärtsbewegung des Schwimmittels (1) einer Drehung der Unwuchtmasse (3, 27, 28) vorwiegend um den Winkelbereich von 180° bis 360° entspricht, wobei die Drehachse (4, $O_5$, $O_6$, $O_7$, $O_8$) innerhalb des Zeitintervalls, das einer Drehung der Unwuchtmasse (3, 27, 28) während der Periode der Aufwärtsbewegung des Schwimmittels (1) vorwiegend um den Winkelbereich von 180° bis 360°, während der Periode der Abwärtsbewegung des Schwimmittels (1) einer Drehung derselben vorwiegend um den Winkelbereich von 0° bis 180° entspricht, im wesentlichen unbeweglich bleibt.

3. Anlage zur Wellenenergieumformung mit einem einer Wellenbewegung folgenden Schwimmittel (1), einem Schwingungserzeuger (2, 24), der eine in einer zum Schwimmittel (1) auf- und abbeweglich geführten Stütze (5, 23) aufweist, die wenigstens eine um eine in einer Ebene im wesentlichen senkrecht zur Bewegungsrichtung des Schwingungserzeugers (2, 24) angeordnete Drehachse (4, $O_5$, $O_6$, $O_7$, $O_8$) drehbare Unwuchtmasse (3, 27, 28) aufnimmt, wobei erste und zweite Mittel (6, 6a, 33, 34) zum Begrenzen der Bewegung der Stütze (5, 23) in beiden Richtungen vorgesehen sind, und einem elektrischen Generator (21, 53) zur Energieentnahme von den Unwuchtmassen (3), dadurch **gekennzeichnet,** daß mindestens eine vertikale Führung (7) vorgesehen ist, die in der Nähe des Schwimmittels (1) angebracht ist und die Wellenschwingungen minimal aufnimmt, und ein drittes Mittel (8, 11, 31-50) zum Begrenzen der Bewegung der Stütze (5, 23) vorgesehen ist, das mit der Führung (7) mechanisch gekoppelt und durch die Bewegungsrichtung des Schwimmittels (19) auf der Welle steuerbar ist.

4. Anlage nach Anspruch 3, dadurch gekennzeichnet, daß das dritte Mittel (8) in die Bewegungsbahn der Stütze (5, 23) einfahrbare Anschläge umfaßt.

5. Anlage nach Anspruch 3, dadurch gekennzeichnet, daß das dritte Mittel mindestens zwei, mit der Stütze (23) verbundene Hydraulikzylinder (31, 32) umfaßt, wobei der Kolben (34) eines von ihnen mit dem Schwimmittel (1), der Kolben (33) des anderen mit der Führung (7) verbunden ist und die Zylinderräume eines jeden Hydraulikzylinders (31, 32) durch jeweils ein Umsteuerventil (38, 45) miteinander verbunden sind, das mit den Drehachsen ($O_5$, $O_6$, bzw. $O_7$, $O_8$) der Unwuchtmassen (27, 28) kinematisch verbunden ist.

**Claims**

1. A method for converting wave energy by means of an oscillator (2, 24) installed on a floating means (1), comprising at least one unbalanced mass (3, 27, 28) which is movable about an axis of rotation (4, $O_5$, $O_6$, $O_7$, $O_8$), an initial velocity ($v_o$) being imparted to the unbalanced mass (3, 27, 28), and the accelerated movement thereof on a prescribed path (9, 10, 9', 10') being produced in order to accumulate energy by the unbalanced mass (3, 27, 28), the movement comprising a complete rotation of the unbalanced mass (3, 27, 28) and a displacement of the axis of rotation (4, $O_5$, $O_6$, $O_7$, $O_8$) in a plane substantially perpendicular to the floating means (1) as a result of the action upon it of the floating means (1) during the cycle of upward movement of the latter on a wave, the energy accumulated in the unbalanced mass being extracted during the upward movement of the floating means (1) on the wave, characterized in that during each cycle of upward and downward movement of the floating means (1), the unbalanced mass (3, 27, 28) is rotated more than once about its axis of rotation (4, $O_5$, $O_6$, $O_7$, $O_8$), while the axis of rotation (4, $O_5$, $O_6$, $O_7$, $O_8$) of the unbalanced moss (3, 27, 28) is displaced several times under the action of and in the direction of action of the floating means (1), at least one displacement of the axis of rotation (4, $O_5$, $O_6$, $O_7$, $O_8$) taking place during each complete rotation of the unbalanced mass (3, 27, 28) within prescribed time intervals, while the displacement direction of the axis of rotation (4, $O_5$, $O_6$, $O_7$, $O_8$) is reversed with each change of the cycles of upward and downward movement of the floating means (1) on the wave, keeping the energy accumulated in the unbalanced mass (3, 27, 28), the extraction of energy additionally being effected during the downward movement of the floating means (1).

2. A method according to claim 1, characterized in that with each complete rotation of the unbalanced mass (3, 27, 28), the single displacement of the axis of rotation (4, $O_5$, $O_6$, $O_7$, $O_8$) during the upward movement of the floating means (1) takes place within a time interval which corresponds to a rotation of the unbalanced moss (3, 27, 28) predominantly around the angular range of 0°, to 180° during the cycle of upward movement of the floating means (1), and to a rotation of the unbalanced mass (3, 27, 28) predominantly around the angular range of 180° to 360° during the cycle of downward movement of the floating means (1), the axle of rotation (4, $O_5$, $O_6$, $O_7$, $O_8$) remaining substantially stationary within the time interval which corresponds to a rotation of the unbalanced mass (3, 27, 28) predominantly around the angular range of 180° to 360° during the cycle of upward movement of the floating means (1), and to a rotation of the said unbalanced mass predominantly around the angular range of 0° to 180° during the cycle of downward movement of the floating means (1).

3. An installation for converting wave energy comprising a floating means (1) following the motion of a wave, an oscillator (2, 24) which comprises a support (5, 23) guided so as to be movable up and down relative to the floating means (1), which support accommodates at least one unbalanced mass (3, 27, 28) rotatable about an axis of rotation (4, $O_5$, $O_6$, $O_7$, $O_8$) arranged in a plane substantially perpendicular to the direction of movement of the oscillator (2, 24), first and second means (6, 6a, 33, 34) being provided to limit the movement of the support (5, 23) in both directions, and an electric generator (21, 53) for the extraction of energy from the unbalanced masses (3), characterized in that at least one vertical guide (7) is provided which is installed in the vicinity of the floating means (1) and which absorbs the wave oscillations to a minimal extent, and a third means (8, 11, 31-50) is provided to limit the movement of the support (5, 23), the said third means being mechanically coupled with the guide (7) and controllable by the direction of movement of the floating means (19) [sic, recte 1) on the wave.

4. An installation according to claim 3, characterized in that the third means (8) comprises stops which nay be moved into the path of movement of the support (5, 23).

5. An installation according to claim 3, characterized in that the third means comprises at least two hydraulic cylinders (31, 32) connected to the support (23), the piston (34) of one of them being connected to the floating means (1) and the piston (33) of the other being connected to the guide (7), and the cylindrical chambers of each of the hydraulic cylinders (31, 32) being connected to one another by means of respective reversing valves (38, 45) which are kinematically connected to the axes of rotation ($O_5$, $O_6$ or $O_7$, $O_8$) of the balanced masses (27, 28).

## Revendications

1. Procédé de conversion de l'énergie des vagues au moyen d'un générateur d'oscillations (2, 24) installé sur un moyen flottant (1), avec au moins une masse de balourd (3, 27, 28) mobile autour d'un axe de rotation (4, $O_5$, $O_6$, $O_7$, $O_8$), une vitesse initiale ($V_o$) étant attribuée à la masse de balourd (3, 27, 28) et son mouvement accéléré étant provoqué sur une trajectoire (9, 10, 9', 10') prédéterminée en vue de stocker de l'énergie par le biais de la masse de balourd (3, 27, 28), le mouvement comprenant une rotation complète de la masse de balourd (3, 27, 28) et un déplacement de l'axe de rotation (4, $O_5$, $O_6$, $O_7$, $O_8$) dans un plan sensiblement perpendiculaire au moyen flottant (1), par suite de l'action du moyen flottant (2) pendant la période du mouvement de montée de ce dernier sur un arbre, le prélèvement de l'énergie stockée dans la masse de balourd s'effectuant pendant le mouvement de montée du flotteur (1) sur l'arbre, caractérisé en ce que pendant chaque période du mouvement de montée et de descente du moyen flottant (1) la masse de balourd (3, 27, 28) est soumise à une rotation de plus d'un tour autour de son axe de rotation (4, $O_5$, $O_6$, $O_7$, $O_8$), tandis que l'axe de rotation (4, $O_5$, $O_6$, $O_7$, $O_8$) de la masse de balourd (3, 27, 28) est déplacé à plusieurs reprises sous l'effet et sous la direction de l'effet du moyen flottant (1), pendant chaque rotation complète de la masse de balourd (3, 27, 28) à l'intérieur d'un intervalle de temps prédéterminé s'effectue au moins un déplacement de l'axe de rotation (4, $O_5$, $O_6$, $O_7$, $O_8$), tandis qu'à chaque alternance des périodes du mouvement de montée et de descente du moyen flottant (1) sur l'arbre, le déplacement de l'axe de rotation (4, $O_5$, $O_6$, $O_7$, $O_8$) est inversé tout en conservant l'énergie stockée dans la masse de balourd (3, 27, 28), le prélèvement d'énergie étant effectué en plus pendant le mouvement de descente du moyen flottant (1).

2. Procédé selon la revendication 1, caractérisé en ce qu'à chaque rotation complète de la masse de balourd (3, 27, 28), le déplacement initial de l'axe de rotation (4, $O_5$, $O_6$, $O_7$, $O_8$), s'effectue pendant le mouvement de montée du moyen flottant (1) à l'intérieur d'un intervalle de temps qui correspond à une rotation de la masse de balourd (3, 27, 28) pendant la période du mouvement de montée du moyen flottant (1), principalement dans la plage angulaire de 0 à 180° et pendant la période du mouvement de montée du moyen flottant (1) d'une rotation de la masse de balourd (3, 27, 28) principalement de la plage angulaire de 180 à 360°, l'axe de rotation (4, $O_5$, $O_6$, $O_7$, $O_8$) restant sensiblement immobile pendant l'intervalle de temps qui correspond à une rotation de la masse de balourd (3, 27, 28) pendant la période du mouvement de montée du moyen flottant (1), principalement dans la plage angulaire de 180° à 360°, pendant la période du mouvement de descente du moyen flottant (1) d'une rotation de celui-ci, principalement de la plage angulaire allant de 0° à 180°.

3. Installation de conversion de l'énergie des vagues avec un moyen flottant (1) suivant le mouvement de vagues, un générateur d'oscillations (2, 24) qui présente un appui (5, 23) guidé de façon à pouvoir se déplacer en montée et en descente par rapport au moyen flottant (1) et qui supporte au moins une masse de balourd (3, 27, 28) pouvant tourner autour d'un axe de rotation (4, $O_5$, $O_6$, $O_7$, $O_8$), disposé dans un plan sensiblement perpendiculaire par rapport à la direction de déplacement du générateur d'oscillations (2, 24), des premier et deuxième moyens (6, 6a, 33, 34) destinés à limiter le déplacement de l'appui (5, 23) dans les deux directions étant prévus et un générateur électrique (21, 53) étant prévu pour prélever de l'énergie à partir des masses de balourd (3) caractérisée en ce qu'il est prvu au moins un guidage vertical (7) est prévu qui est monté à proximité du moyen flottant (1) et qui supporte au minimum les oscillations des vagues et un troisième moyen (8, 11, 31 à 50) est prévu pour limiter le déplacement de l'appui (5, 23) et est couplé mécaniquement au guidage (7) et est susceptible d'être commandé par la direction de déplacement du moyen flottant (19) sur l'arbre.

4. Installation selon la revendication 3, caractérisée en ce que le troisième moyen (8) comporte des butées susceptibles de venir se placer sur la trajectoire de déplacement des appuis (5, 23).

5. Installation selon la revendication 3, caractérisée en ce que le troisième moyen comprend au moins deux vérins hydrauliques (31, 32) reliés à l'appui (23), le piston (34) de l'un d'entre eux étant relié au moyen flottant (1) tandis que le piston (33) de l'autre est relié au guidage (7) et les chambres de cylindre de chaque vérin hydraulique (31, 32) sont reliées l'une à l'autre par au moins une valve de commande d'inversion (38, 45) qui est reliée cinématiquement aux axes de rotation ($O_5$, $O_6$, ou $O_7$, $O_8$) des masses de balourd (27, 28).

**FIG.1**

25

FIG. 2

$V_0 + 2W$

$V_0$

$W$

*FIG.3*

$V_0' = 2W$

$V_0 + 2W$

$W$

FIG. 4

FIG.5

FIG.6

FIG. 7

FIG.8

FIG.9